# FASCICULE DE BREVET EUROPEEN

(11) **EP 1 101 687 B1**
(45) Date de publication et mention de la délivrance du brevet: **30.07.2003**
(21) Numéro de dépôt: 00403021.9
(22) Date de dépôt: 27.10.2000
(51) Int. Cl.: B62D 1/19

(54) **Dispositif d'absorption d'énergie modulable à charges pyrotechniques d'une colonne de direction de véhicule automobile**
Pyrotechnisch einstellbare Kraftfahrzeug- Lenksäulenenergieabsorptionseinrichtung
Pyrotechnically adjustable motor vehicle steering column energy absorbing device

(30) Priorité: 19.11.1999 FR 9914813
(43) Date de publication de la demande: 23.05.2001
(73) Titulaire: NACAM France S.A., F-41100 Vendôme (FR)
(72) Inventeur: Ben Rhouma, Abdel Karim, 41100 Vendome (FR); Duval, Benoit, 41100 Vendome (FR)
(74) Mandataire: Chassagnon, Jean-Alain

(56) Documents cités:
- DE-A- 19 510 615
- FR-A- 2 775 647
- FR-A- 2 788 029
- ANONYMUS: "COMPUTER CONTROLLED ENERGY ABSORBING STEERING COLUMN FOR AUTOMOTIVE USE" RESEARCH DISCLOSURE, no. 359, 1 mars 1994 (1994-03-01), pages 157-159, XP000440547 INDUSTRIAL OPPORTUNITIES LTD. HAVANT., GB ISSN: 0374-4353

## Description

La présente invention se rapporte à un dispositif d'absorption d'énergie modulable pour colonne de direction de véhicule automobile, qui met en oeuvre des charges pyrotechniques.

Le dispositif selon l'invention s'applique notamment à une colonne de direction réglable en profondeur et/ou en inclinaison, dont l'arbre de direction est monté dans un tube-corps, qui est supporté et bloqué sur la carrosserie à la position voulue. L'invention peut s'appliquer également à une colonne de direction non réglable.

FR-A-2 775 647 décrit les caractéristique du préambule de la revendication 1.

L'amélioration croissante de la sécurité sur les colonnes de direction demande aux constructeurs de maîtriser tous les paramètres des systèmes d'absorption d'énergie. Ainsi, en ce qui concerne le procédé d'absorption d'énergie au moyen du déroulement d'un fil, qui est de plus en plus utilisé sur les colonnes de direction, il est envisagé de moduler cette absorption d'énergie en fonction des caractéristiques du conducteur telles que notamment son poids et le fait qu'il ait attaché sa ceinture ou non et en fonction de la vitesse du véhicule.

Un but de la présente invention est de proposer un dispositif d'absorption d'énergie modulable, qui mette en oeuvre des enroulements de fils de formes simples et faciles à réaliser, tout en permettant d'absorber exactement l'énergie à dissiper en fonction des caractéristiques du conducteur et du véhicule, et qui se monte facilement dans l'encombrement des colonnes de direction existantes. Selon un mode de réalisation, l'invention se rapporte à un dispositif d'absorption modulable d'énergie d'une colonne de direction de véhicule automobile, qui comprend un arbre de direction monté tournant dans un tube corps relié à un ensemble support fixé au châssis du véhicule,
cet ensemble comprenant un support fixe solidaire du châssis du véhicule, et un support mobile qui est relié et bloqué sur le support fixe avec une force de serrage déterminée afin que ce blocage cesse en cas de choc ; caractérisé en ce que ledit système d'absorption modulable d'énergie comprend :
- au moins deux enroulements d'un élément métallique de section déterminée, qui sont reliés au support fixe et au support mobile par un axe de tenue et par un axe d'accrochage respectivement ;
- les enroulements étant montés sur un ou des rouleaux disposés sur l'axe de tenue solidaire de l'élément support fixe et comprenant chacun une portion rectiligne ayant sensiblement la même direction que l'effort à amortir, et une extrémité libre qui s'accroche sur l'axe d'accrochage correspondant disposé à une extrémité du support mobile du côté du boîtier de direction, c'est-à-dire du côté opposé au volant de direction ;
- au moins un enroulement ayant son axe d'accrochage ou son axe de tenue constitué par une tige de maintien déplaçable suivant son axe par des moyens de déplacement pyrotechniques qui sont mis en action par des moyens de commande ;
- de manière qu'en cas de choc, le support mobile soit relié au support fixe par un nombre d'enroulements adapté à l'énergie à absorber.

En cas de choc, cet agencement permet de relier le support mobile au support fixe par un nombre voulu d'enroulements, déterminé suivant le poids du conducteur, le fait qu'il ait attaché sa ceinture de sécurité ou non, ainsi que suivant la vitesse du véhicule.

Ainsi, le support mobile, relié au tube-corps donc au volant, tire l'extrémité libre du ou des enroulements accrochée à l'axe d'accrochage correspondant, de façon à dérouler le ou les enroulement(s) concerné(s) en absorbant l'énergie à dissiper.

Selon différentes architectures possibles de l'invention pour l'accrochage ou pour la tenue des enroulements, au moins un enroulement a une tige de maintien déplaçable qui est sensiblement horizontale ou verticale.

Avantageusement selon l'invention, trois enroulements sont montés sur un rouleau disposé autour d'un axe de tenue et sont accrochés sur des tiges de maintien déplaçables ayant des actionneurs pyrotechniques correspondants qui sont sensiblement verticaux.

Selon une autre réalisation de l'invention, trois enroulements sont montés sur un rouleau disposé autour d'un axe de tenue et sont accrochés l'un sur une tige de maintien fixe supportée par deux paliers, et les deux autres sur des tiges de maintien déplaçables correspondantes supportées par deux paliers, et ayant chacune un actionneur pyrotechnique.

Dans une autre réalisation de l'invention, trois enroulements sont montés chacun sur un rouleau correspondant disposé autour d'un axe de tenue et sont accrochés l'un sur une tige de maintien fixe supportée par deux paliers, et les deux autres chacun sur des tiges de maintien déplaçables correspondantes supportées par deux paliers et ayant chacune un actionneur pyrotechnique.

Dans cette réalisation de l'invention, l'enroulement accroché sur une tige de maintien fixe est l'enroulement central.

Selon une autre réalisation de l'invention, trois enroulements sont montés chacun sur un rouleau correspondant disposé autour d'un axe de tenue correspondant sensiblement vertical, la tenue de l'enroulement central étant constituée par une tige de maintien fixe supportée par deux paliers centraux, et la tenue de chaque enroulement latéral étant constituée par une tige de maintien déplaçable supportée par deux paliers latéraux correspondants, et ayant un actionneur pyrotechnique correspondant, les trois enroulements étant accrochés sur un seul et même axe d'accrochage constitué par une tige de maintien fixe supportée par deux paliers centraux et par deux paliers latéraux.

Dans un type de structure détaillée de l'invention :
- le support fixe comporte une embase avec deux oreilles sensiblement verticales entre lesquelles vient s'engager le support mobile, chacune des oreilles ayant un trou de passage de l'axe de tenue ;
- le support mobile comporte deux parties latérales sensiblement verticales et une portion de raccordement ;
- chacune des parties latérales ayant à sa partie supérieure un trou oblong de passage de l'axe de tenue, le trou oblong ayant une longueur correspondant à la course d'absorption d'énergie.

Dans ce type de structure, l'axe de tenue est constitué par une tige avec un manchon, ledit manchon est disposé entre les deux parties latérales du support mobile, ladite tige est maintenue à chacune de ses deux extrémités par un ensemble de fixation dans l'oreille correspondante du support fixe et par un ensemble de coulissement du support mobile ; chaque ensemble de fixation est bloqué sur chacune des oreilles avec une force déterminée.

Chaque ensemble de fixation comprend :
- une rondelle de serrage disposée entre le manchon et l'oreille correspondante du support fixe, ladite rondelle de serrage comprenant un tube traversant le trou oblong de la partie latérale correspondante du support mobile ; et
- une extrémité filetée correspondante de la tige traverse le tube de la rondelle de serrage et le trou de passage de l'oreille correspondante pour recevoir un écrou de serrage, qui s'applique sur ladite oreille afin d'assurer le blocage de l'ensemble de fixation à une valeur déterminée.

Chaque ensemble de coulissement comporte une rondelle externe avec une protubérance carrée et une rondelle interne munie d'un trou carré qui reçoit ladite protubérance carrée ;
- ladite protubérance carrée a un trou de passage du tube de la rondelle de serrage ;
- la rondelle externe est disposée entre l'oreille correspondante du support fixe et la partie latérale correspondante du support mobile ;
- la rondelle interne est disposée entre ladite partie latérale et la rondelle de serrage ;
- la protubérance carrée traverse et coulisse dans le trou oblong correspondant du support mobile.

Dans une variante de réalisation, la tige a une de ses deux extrémités constituée par une extrémité filetée et l'autre extrémité constituée par une tête s'appliquant sur l'oreille correspondante du support fixe.

Dans ce premier type de structure, l'axe d'accrochage est constitué par la tige de maintien fixe centrale et les deux tiges de maintien déplaçables latérales chacune avec un actionneur pyrotechnique, qui est disposé et fixé sur la face d'appui externe correspondante du support mobile ; les tiges de maintien mobiles latérales traversent un trou de passage correspondant de chacune des parties latérales du support mobile, et sont supportées par des paliers correspondants appartenant à un étrier monté et fixé sur la portion de raccordement, de l'extrémité du support mobile ; la tige de maintien fixe centrale est supportée par les deux paliers ; un élément de fermeture de l'étrier entoure l'extrémité du support mobile, l'étrier et les extrémités libres des enroulements, ledit élément de fermeture étant assemblé avec le support mobile et l'étrier.

Un deuxième type de structure détaillée de l'invention comporte :
- un axe de tenue constitué par une tige de maintien fixe centrale, et par deux tiges de maintien déplaçables latérales ayant chacune un actionneur pyrotechnique ;
deux rouleaux montés sur un tube mince dans lequel coulissent les tiges de maintien déplaçables latérales, et un rouleau monté sur la tige de maintien fixe centrale, qui est montée sur le tube mince.

Dans ce deuxième type de structure, chacune des deux tiges de maintien déplaçables latérales comprend un actionneur pyrotechnique disposé et fixé sur la face externe de l'oreille correspondante du support fixe ; l'axe de tenue comprend à chacune de ses extrémités un ensemble de fixation dans l'oreille correspondante du support fixe, et un ensemble de coulissement de la partie latérale correspondante du support mobile ; chaque ensemble de fixation est bloqué sur chacune des oreilles avec une force de serrage déterminée ; chacune des tiges de maintien latérales déplaçables traverse ou s'engage dans l'ensemble de fixation correspondant.

Chaque ensemble de fixation comprend un tube métallique qui traverse le trou oblong de la partie latérale correspondante du support mobile, et qui traverse le trou de passage de l'oreille correspondante ; un évasement interne est agencé du côté de ladite partie latérale et un évasement externe est agencé du côté de ladite oreille afin d'assurer le blocage de l'ensemble de fixation.

Chaque ensemble de coulissement comporte une rondelle externe avec une demie protubérance carrée et un trou de passage, et une rondelle interne avec une demie protubérance carrée et un trou de passage, chaque demie protubérance s'emboîtant dans l'autre rondelle à l'aide de tenons rentrant dans des trous pour former une protubérance carrée ; la rondelle externe est disposée entre l'oreille correspondante du support fixe et la partie latérale correspondante du support mobile ; la rondelle interne est disposée entre ladite partie latérale et l'évasement interne du tube métallique ; la protubérance carrée traverse et coulisse dans le trou oblong correspondant de la partie latérale du support mobile.

De plus, le tube est supporté par quatre paliers appartenant à un étrier monté et fixé sous l'embase du support fixe.

Dans le deuxième type de structure, l'axe d'accrochage comprend trois encoches demi-circulaires aménagées au bord de la portion de raccordement appartenant à l'extrémité du support mobile, chaque encoche recevant l'extrémité libre d'un enroulement précité.

Le dispositif d'absorption d'énergie modulable selon l'invention présente l'avantage d'avoir une structure simple à réaliser, avec une garantie de qualité lorsque la fabrication est réalisée en très grande série, comme c'est le cas de l'industrie automobile. De plus, le dispositif se monte facilement dans l'encombrement des colonnes de direction existantes. Enfin, le dispositif d'absorption d'énergie modulable permet d'adapter exactement l'absorption d'énergie à celle demandée, en tenant compte notamment du poids du conducteur, du port de la ceinture de sécurité et de la vitesse du véhicule tout en préservant une même course de déroulement.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue de dessus en perspective d'une colonne de direction de véhicule automobile, qui est équipé d'un dispositif d'absorption d'énergie modulable selon l'invention ;
- la figure 2 est une vue suivant II de la figure 1 ;
- la figure 3 est une coupe suivant le plan passant par les axes de tenue et d'accrochage ;
- la figure 4 est une coupe suivant IV-IV de la figure 3 ;
- la figure 5 est une coupe partielle à grande échelle de la figure 3 relative à l'axe de tenue ;
- la figure 6 est une vue éclatée en perspective correspondant à la figure 5 ;
- la figure 7 est une vue éclatée en perspective correspondant à la figure 4 ;
- la figure 8 est une vue en perspective d'un élément de la figure 4 ;
- la figure 9 est une coupe suivant IX-IX de la figure 2 d'un autre mode de réalisation de l'invention ;
- la figure 10 est une coupe suivant X-X de la figure 9 ;
- la figure 11 est une coupe partielle à grande échelle de la figure 9 relative à l'axe de tenue ;
- la figure 12 est une vue éclatée en perspective correspondant à la figure 11 ;
- la figure 13 est une vue en perspective correspondant à la figure 11 ;
- la figure 14 est une vue éclatée en perspective des figures 9 et 10;
- la figure 15 est une vue en perspective avec une coupe transversale partielle d'un autre mode de réalisation de la tenue et de l'accrochage des enroulements ;
- la figure 16 est une vue en perspective d'une autre réalisation de la tenue et de l'accrochage ;
- la figure 17 est une vue en perspective d'une autre réalisation de la tenue et de l'accrochage ; la figure 18 est une vue en perspective d'une autre réalisation de la tenue et de l'accrochage ;
- la figure 19 est une vue de dessus de la figure 18, avec une coupe partielle ;
- la figure 20 est une vue en perspective d'une autre réalisation de la tenue et de l'accrochage ;
- la figure 21 est une vue en perspective d'une autre réalisation de la tenue et de l'accrochage ; et
- la figure 22 est une vue en perspective d'une autre réalisation de la tenue et de l'accrochage.

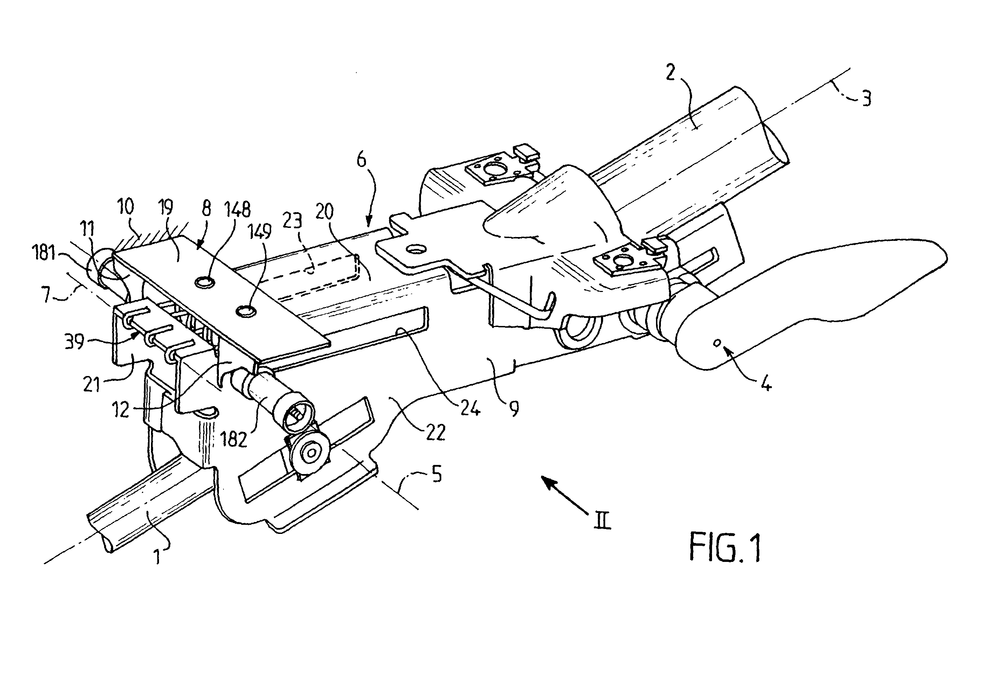

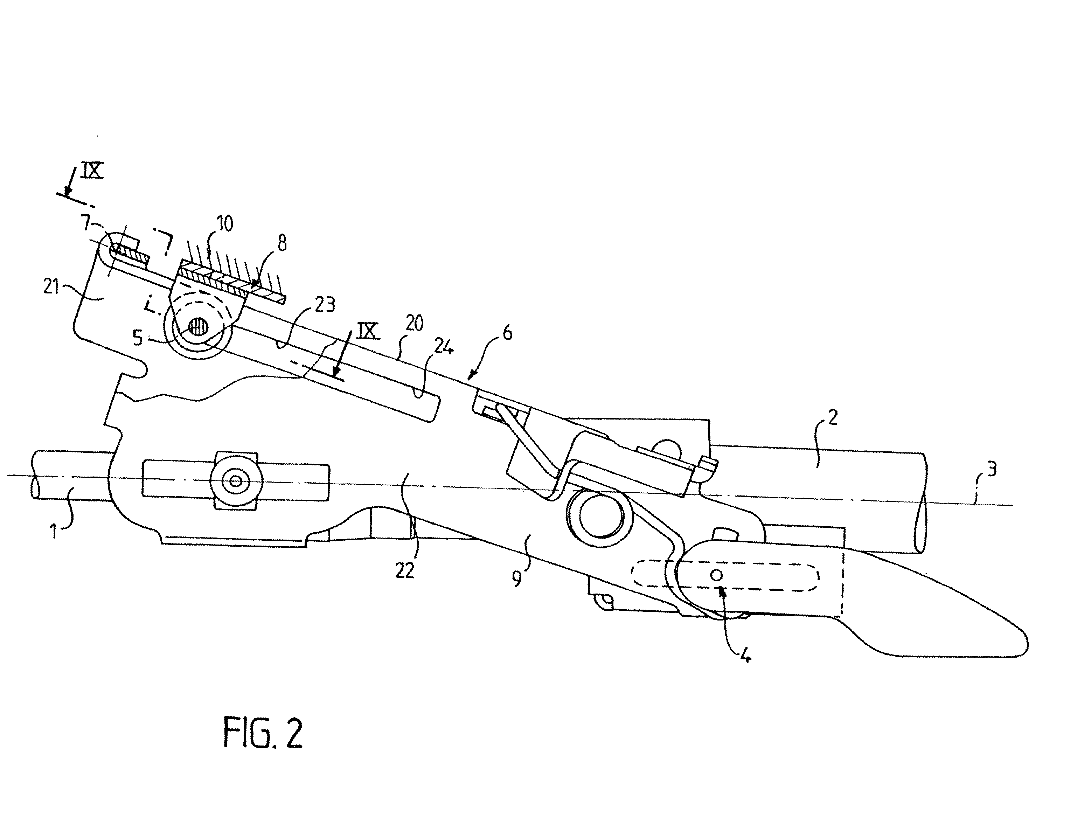

Comme on peut le voir sur les figures 1, 2, 3 et 9, la colonne de direction de véhicule automobile comprend un arbre de direction 1 qui est monté tournant dans un tube-corps 2 autour d'un axe de direction 3. Le tube-corps 2 est relié à un ensemble support 6 par un système de réglage 4 en profondeur et/ou en inclinaison. L'invention peut s'appliquer également à une colonne de direction non réglage, dans ce cas le tube-corps 2 est relié directement à l'ensemble support 6.

L'ensemble support 6 comprend un support fixe 8 et un support mobile 9. Le support fixe 8 est solidaire du châssis 10 du véhicule ou d'un élément de carrosserie. Le support mobile 9 est relié au tube-corps 2 par le système de réglage. Le support mobile 9 est relié au support fixe 8 et est bloqué sur ledit support fixe avec une force de serrage déterminée, qui tient compte du choc à absorber afin de permettre dans ce cas au support mobile 9 de coulisser dans le support fixe 8.

Le support fixe 8 comporte une embase 19 avec deux oreilles 11 et 12 sensiblement verticales qui sont raccordées à cette embase 19. Chacune des oreilles 11 et 12 a un trou de passage 13, 14 de l'axe 5 de tenue du support mobile 9. Les oreilles 11 et 12 sont sensiblement verticales et parallèles à l'axe de direction 3.

Le support mobile 9 comporte deux parties latérales 21 et 22 sensiblement verticales et une partie de raccordement 20. Le support mobile 9 vient s'engager entre les deux oreilles 11 et 12 du support fixe 8 par l'intermédiaire de ses deux parties latérales 21 et 22, qui sont sensiblement parallèles à l'axe de direction 3.

Chacune des parties latérales 21 et 22 a, à sa partie supérieure, un trou oblong 23, 24 de passage de l'axe de tenue du support mobile 9.

La longueur de chacun de ces trous oblongs 23 et 24 correspond à la course de récupération d'énergie.

Chacune des parties latérales 21 et 22 a, à sa partie inférieure, un trou de passage de l'axe du système de réglage 4.

Dans la suite de la description et pour un même élément, on appellera interne par rapport à l'axe de direction 3, ce qui est le plus près de cet axe de direction 3, et externe ce qui est le plus éloigné. Ainsi l'oreille 11 du support fixe 8 a une face interne 15 et une face externe 17 par rapport à l'axe de direction 3. De même, l'oreille 12 a une face interne 16, et une face externe 18 par rapport à ce même axe de direction 3.

De la même façon pour le support mobile 9, la portion latérale 21 a une face interne 25 et une face externe 27, et la portion latérale 22 a une face interne 26 et une face externe 28.

Comme on peut le voir sur les figures 1, 2, 3 et 9, le dispositif d'absorption modulable d'énergie selon l'invention comporte :
- au moins un axe de tenue 5,
- au moins un axe d'accrochage 7,
- et plusieurs enroulements qui sont reliés aux axes de tenue 5 et d'accrochage 7.

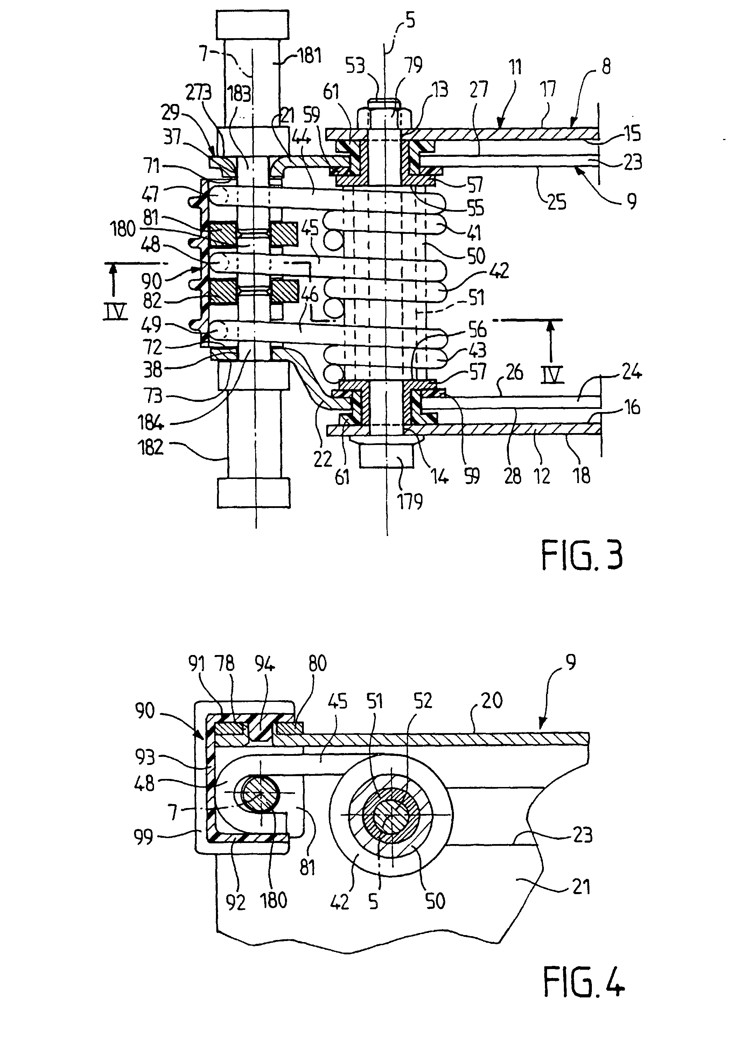

L'axe de tenue 5 est sensiblement perpendiculaire à l'axe de direction 3 de la colonne et aux oreilles 11 et 12 du support fixe 8 et il est porté par les dites oreilles 11 et 12. L'axe d'accrochage 7 est sensiblement perpendiculaire à l'axe de direction 3 de la colonne et aux parties latérales 21 et 22 du support mobile 9 et il est porté par le support mobile 9. Les enroulements sont obtenus à partir d'un élément métallique de section déterminée, qui peut être par exemple ronde ou carrée. Dans le cas de la figure 3, les enroulements sont référencés 41, 42 et 43 et sont montés sur un rouleau 50, qui est disposé sur l'axe de tenue 5 correspondant solidaire de l'élément support fixe 8.

Les enroulements 41, 42, 43 ont chacun une extrémité libre 47, 48 et 49 qui s'accroche sur l'axe d'accrochage 7 disposé à une extrémité 29 du support mobile 9. L'extrémité correspondante 29 du support mobile 9 est située du côté du boîtier de direction, c'est-à-dire du côté opposé au volant de direction.

Selon une caractéristique essentielle de l'invention, au moins un enroulement a son axe d'accrochage 7 constitué par une tige de maintien déplaçable 183, 184 comme cela est représenté sur la figure. Les tiges de maintien sont déplaçables suivant leur axe. Ce mouvement est obtenu par l'intermédiaire de moyens de déplacement pyrotechniques 181, 182, qui sont mis en action par des moyens de commande.

Ainsi en cas de choc, il est possible selon l'invention de relier l'axe d'accrochage 7 à l'axe de tenue 5 par un nombre voulu d'enroulements, qui est déterminé en fonction des caractéristiques du conducteur et notamment de son poids et du port de la ceinture de sécurité, ainsi qu'en fonction de la vitesse du véhicule. De cette manière, en cas de choc, le support 9 qui est relié au tube-corps 2 donc au volant, tire l'extrémité libre des enroulements, qui est accrochée à l'axe d'accrochage 7, de façon à dérouler le ou les enroulements en absorbant l'énergie à dissiper.

Un premier mode de réalisation détaillée de l'invention est représenté sur les figures 3, 4, 5, 6, 7, et 8. Dans ce premier type de structure de l'invention, l'axe d'accrochage 7 des enroulements correspondants est disposé à l'extrémité 29 du support mobile 9 et est constitué par une tige de maintien fixe centrale 180, et par deux tiges de maintien déplaçables latérales 183 et 184 ayant chacune un actionneur pyrotechnique 181, 182.

Trois enroulements 41, 42 et 43 sont montés sur un rouleau 50 disposé sur un manchon 51 autour de l'axe de tenue 5. Chaque enroulement 41, 42 et 43 comprend une portion rectiligne 44, 45 et 46 qui a sensiblement la même direction que l'effort à amortir. Chaque portion rectiligne 44, 45 et 46 se prolonge par une extrémité libre 47, 48, 49, qui est recourbée autour de la tige de maintien 31.

L'axe de tenue 5 est constitué par une tige 52, qui traverse le support fixe 8 et le support mobile 9. La tige 52 porte un manchon 51, qui est disposé entre les deux faces internes respectives 25 et 26 des deux parties latérales 21 et 22 du support mobile 9. La tige 52 est maintenue à chacune de ses deux extrémités 53 et 54 par un ensemble de fixation, qui se monte sur l'oreille correspondante 11 et 12 du support fixe 8. De plus, il est agencé un ensemble de coulissement du support mobile 9 dans cet ensemble de fixation. Chaque ensemble de fixation est bloqué sur chacune des oreilles 11 et 12 avec une force de serrage déterminée.

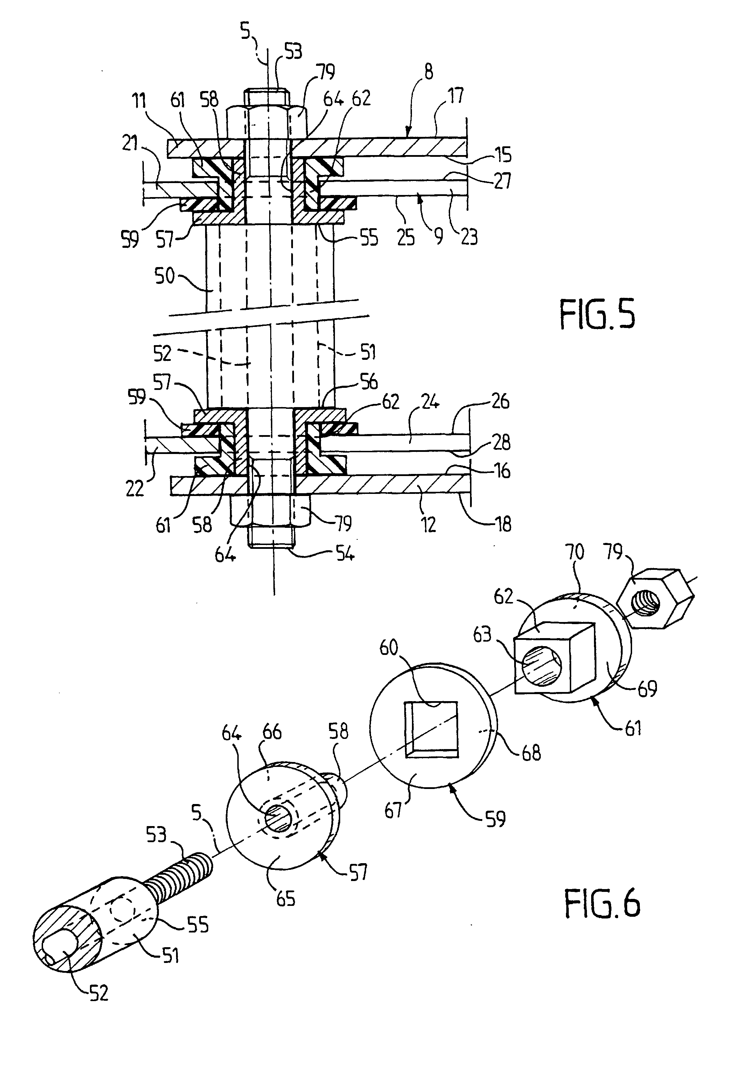

Comme on peut le voir plus précisément sur les figures 5 et 6, chaque ensemble de fixation disposé à l'extrémité de la tige 52 comprend une rondelle de serrage 57. Cette rondelle de serrage 57 est disposée entre la face d'appui 55 ou 56 du manchon 51 par sa face interne 65, et la face interne correspondante 15 et 16 des oreilles 11 et 12 du support fixe 8. La rondelle de serrage 57 comprend un tube 58, qui traverse le trou oblong 23, 24 de la partie latérale 21, 22 correspondante du support mobile 9. La tige 52 a deux extrémités filetées 53 et 54, qui traversent les trous de passage 64 des tubes 58 des rondelles de serrage 57. Chaque extrémité filetée 53, 54 traverse le trou de passage 13, 14 de l'oreille correspondante 11, 12 pour recevoir un écrou 79 de serrage, qui s'applique sur la face externe correspondante 17, 18 des oreilles 11 et 12, afin d'assurer le blocage de l'ensemble de fixation avec une force déterminée.

Chaque ensemble de coulissement comporte une rondelle externe 61 avec une face interne 69 et une face externe 70 et une rondelle interne 59 avec une face interne 67 et une face externe 68. La rondelle externe 61 est munie d'une protubérance carrée 62, et la rondelle interne 59 a un trou carré 60, agencé de manière à recevoir ladite protubérance carrée 62. De plus, la protubérance carrée 62 est munie d'un trou de passage 63 du tube 58 de la rondelle de serrage 57. La rondelle externe 61 est disposée entre la face interne correspondante 16, 18 de l'oreille 11, 12 correspondante du support 8, et la face externe correspondante 27, 28 de la partie latérale 21, 22 correspondante du support mobile 9. La rondelle interne 59 est disposée entre la face interne correspondante 25, 26 de la portion latérale 21, 22, et la face externe 66 de la rondelle de serrage 57. La protubérance carrée 62, traverse et coulisse dans le trou oblong 23, 24 correspondant du support mobile 9.

Dans une variante de réalisation, la tige 52 a une extrémité filetée 53, et l'autre extrémité constituée par une tête 179 s'appliquant sur l'oreille 12 correspondante du support fixe 8, comme représenté sur la figure 3.

L'axe d'accrochage 7 est constitué par la tige de maintien fixe centrale 180 et les deux tiges de maintien mobiles latérales 183, 184 avec un actionneur pyrotechnique correspondant 181, 182. Chaque actionneur 181, 182 est disposé et fixé sur une face d'appui externe correspondante 73, 273 du support mobile 9. Les tiges de maintien mobiles latérales 183, 184 traversent un trou de passage correspondant 37, 38 de chacune des parties latérales 21, 22 du support mobile 9. Chaque tige de maintien mobile latérale 183, 184 est supportée par un palier correspondant 81 et 82, qui appartient à un étrier 80. Cet étrier 80 est monté et fixé sur la portion de raccordement 20 de l'extrémité 29 du support mobile 9. La tige de maintien fixe centrale 180 est supportée par les deux paliers 81 et 82.

De plus, un élément de fermeture 90 de l'étrier 80 entoure l'ensemble formé par l'extrémité 29 du support mobile 9, par l'étrier 80, et par les extrémités libres 47, 48 et 49 des enroulements 41, 42 et 43. Cet élément de fermeture 90 est assemblé avec le support mobile 9 et avec l'étrier 80.

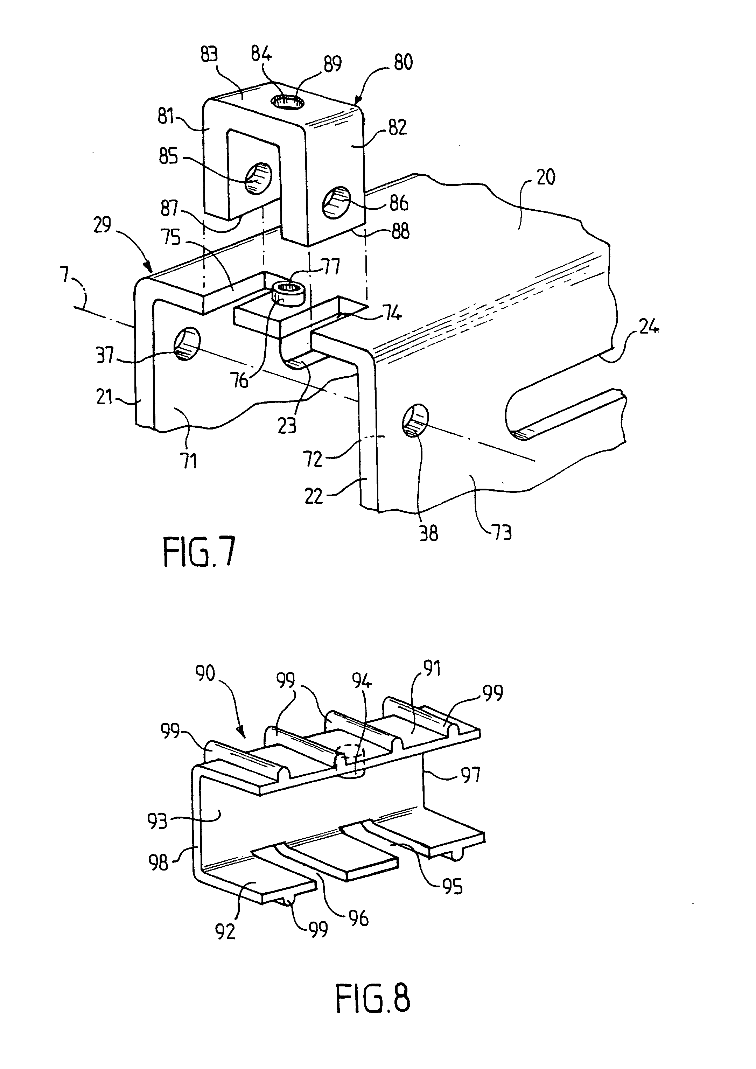

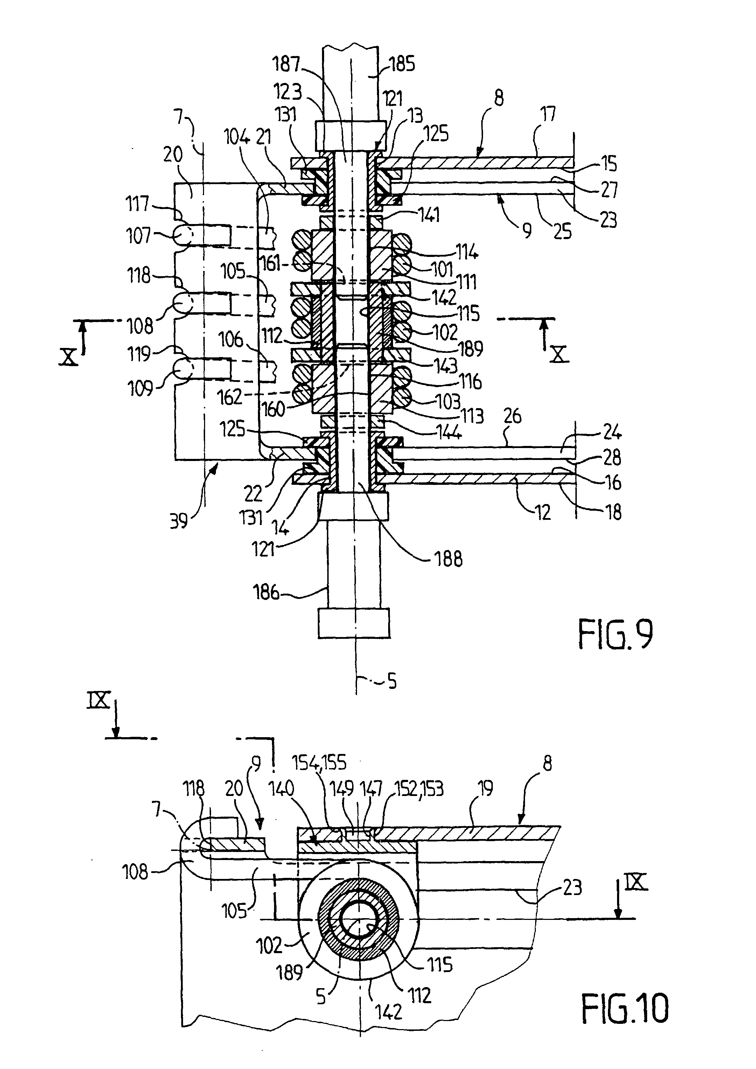

Le montage de l'étrier 80 avec l'élément de fermeture 90 est représenté en détail sur les figures 7 et 8. L'extrémité 29 de l'élément support mobile 9 comprend deux encoches débouchantes 74 et 75, et un tenon 76 avec un trou 77. L'étrier 80 est composé d'une embase 83 avec un palier 81, 82 à chacune de ses extrémités. Chaque palier 81, 82 possède un trou 85, 86 pour le passage et le support de la tige de maintien 31. L'embase 83 est percée d'un trou évasé 84 pour le passage du tenon 76. Les paliers 81 et 82 s'engagent dans les encoches débouchantes 74 et 75, et l'extrémité du tenon 76 est rabattue sur l'évasement 89 du trou 84 pour obtenir un évasement 78.

L'élément de fermeture 90 est composé de deux ailes 91 et 92 sensiblement parallèles, qui sont raccordées par un fond 93, avec des raidisseurs 99 à l'extérieur des deux ailes 91 et 92 et du fond 93. Deux encoches débouchantes 95 et 96 sont aménagées sur l'aile 92 et le fond 93. L'aile 91 est munie d'un tenon 94, qui s'engage dans le trou 77 du tenon 76, et les extrémités 87 et 88 des paliers 81 et 82 pénètrent dans les encoches débouchantes 95 et 96. Les faces latérales 97 et 98 de l'élément de fermeture 90 coulissent respectivement entre les faces d'appui internes 71 et 72 de l'extrémité 29 de l'élément d'appui mobile 9.

Un deuxième mode de réalisation de l'invention est représenté sur les figures 9, 10, 11, 12, 13 et 14. Dans ce deuxième type de structure de l'invention, l'axe de tenue 5 est constitué par une tige de maintien fixe 189 et par deux tiges de maintien mobiles latérales 187 et 188 ayant chacune un actionneur pyrotechnique 185, 186 disposé dans le support fixe 8. L'axe d'accrochage 7 est disposé à l'extrémité 39 du support mobile 9.

Le support fixe a des trous de passage 13, 14 de l'axe de tenue 5, qui est disposé sur des oreilles 11 et 12 solidaires de l'embase 19 du support fixe 8. Le support mobile 9 comporte des parties latérales 21 et 22 et une partie de raccordement 20. Chacune des parties latérales 21, 22 a, à sa partie supérieure, un trou oblong 25, 26 de passage de l'axe de tenue 5 et ayant une longueur correspondant à la course de récupération d'énergie. Trois enroulements 101, 102, et 103 sont montés chacun sur un rouleau 111, 112, 113. Les deux rouleaux 111 et 113 sont montés sur un tube mince 160 dans lequel coulissent les tiges de maintien mobiles latérales 187 et 188. Le rouleau 112 est monté sur la tige de maintien fixe centrale 189, qui est disposée sur le tube mince 160. Chacun des enroulements 101, 102 et 103 comprend une portion rectiligne respective 104, 105 et 106, qui a sensiblement la même direction que l'effort à amortir et se prolonge par une extrémité libre 107, 108, 109, recourbée autour de l'axe d'accrochage 7. Les deux rouleaux 111 et 113 comprennent chacun un trou 114, 116, et sont montés sur le tube mince 160, dans lequel coulissent les tiges de maintien mobiles latérales 187 et 188.

L'axe de tenue 5 est constitué par le tube mince 160, la tige de maintien fixe centrale 189, et chacune des deux tiges de maintien mobiles latérales 187 et 188 avec son actionneur pyrotechnique 185, 186. Chaque actionneur pyrotechnique 185, 186 est disposé et fixé sur la face externe 17, 18 de l'oreille correspondante 11, 12 du support fixe 8. L'axe de tenue 5 comprend à chacune de ses deux extrémités un ensemble de fixation, qui est disposé dans l'oreille correspondante 11, 12 de l'élément support fixe 8. De plus, un ensemble de coulissement de la partie latérale 21, 22 correspondante du support 9, est agencé dans chacun de ces ensembles de fixation. Chaque ensemble de fixation est bloqué sur chacune des oreilles 11 et 12 avec une force déterminée. De plus, la tige de maintien mobile latérale 187, 188 traverse ou s'engage dans l'ensemble de fixation correspondant.

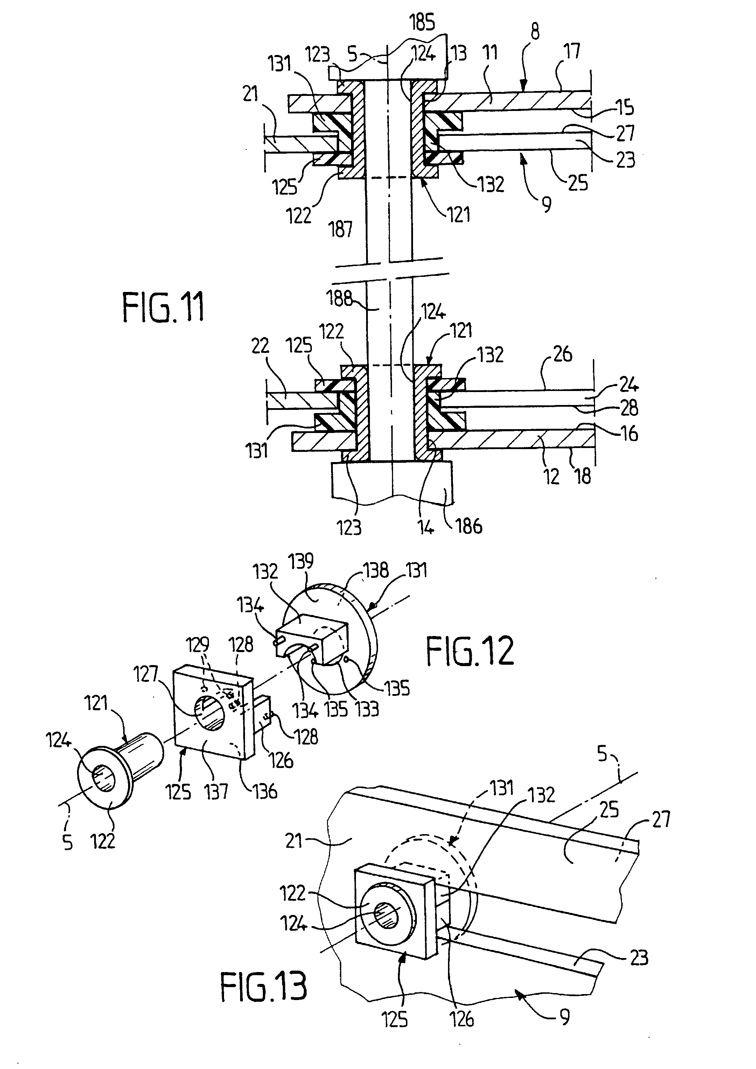

Comme on peut le voir plus précisément sur les figures 11, 12, 13 et 14, chaque ensemble de fixation comprend un tube métallique 121, qui traverse le trou oblong 23 et 24 de la partie latérale correspondante 21 et 22 du support mobile 9. De plus, ce tube métallique 121 traverse le trou de passage 13, 14 de l'oreille 11, 12 correspondante du support fixe 8. Un évasement interne 122 est agencé du côté de ladite portion latérale 21, 22 correspondante, et un évasement externe 123 est agencé du côté de ladite oreille 11, 12 correspondante, afin d'assurer le blocage de l'ensemble de fixation. Enfin, le tube métallique 121 possède un trou de passage 124 de la tige de maintien 32.

Chaque ensemble de coulissement comporte une rondelle externe 131 avec une face interne 139 et une face externe 138 et une rondelle interne 125 avec une face interne 137 et une face externe 136. La rondelle externe 131 est munie d'une demie protubérance carrée 132 et d'un trou de passage 133. La rondelle interne 125 est également munie d'une demie protubérance carrée 126 et d'un trou de passage 127. Chaque demie protubérance 126, 132 s'emboîte respectivement dans l'autre rondelle 131, 125 à l'aide de tenons 128, 134, qui rentrent dans des trous 129, 135 pour former une protubérance carrée.

La rondelle externe 131 est disposée entre l'oreille 11, 12 correspondante du support fixe 8, et la partie latérale 21, 22 correspondante du support mobile 9. La rondelle interne 125 est disposée entre la partie latérale 21, 22 correspondante et l'évasement interne 122 du tube métallique 121. La protubérance carrée traverse et coulisse dans le trou oblong 23, 24 correspondant de la portion latérale 21, 22 du support mobile 9.

Le tube mince 160, la tige de maintien fixe centrale 189, et les tiges de maintien mobiles latérales 187 et 188 sont supportées par quatre paliers 141, 142, 143 et 144, qui appartiennent à un étrier 140. Cet étrier 140 est monté et fixé sous l'embase 19 du support fixe 8.

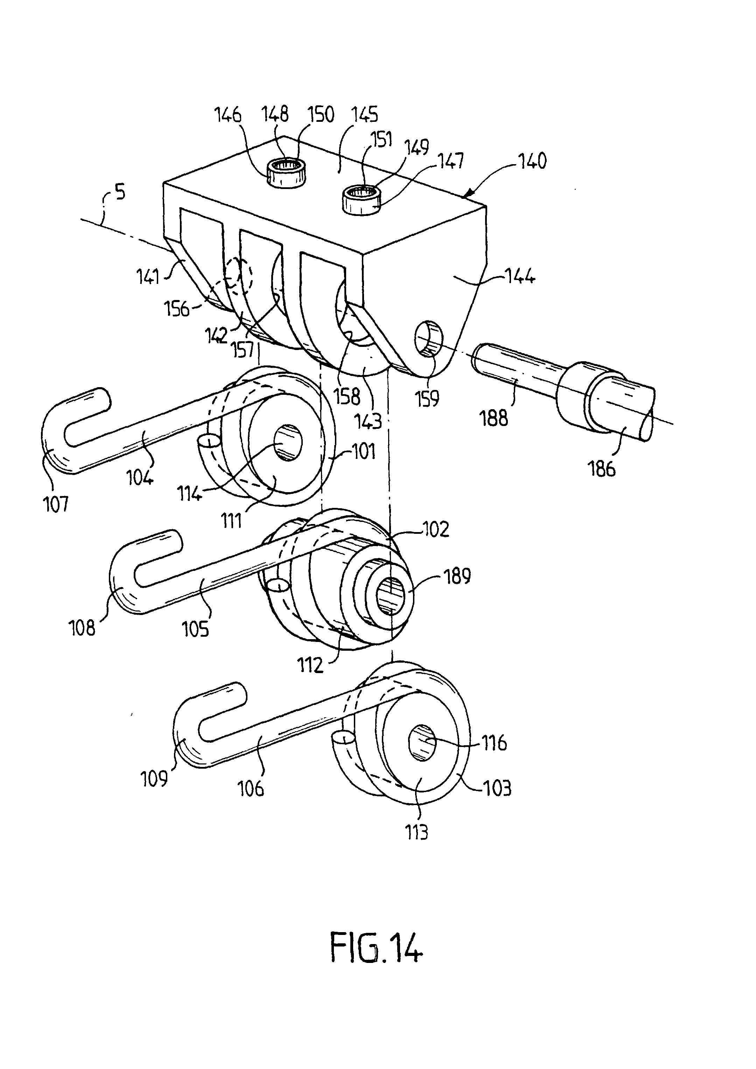

Le montage de l'étrier 140 avec le tube mince 160 sur le support fixe 8 est représenté en détail sur la figure 14.

L'embase 19 du support fixe 8 comprend deux trous évasés 152 et 153 avec un évasement 154 et 155.

L'étrier 140 est composé d'une embase 145 avec quatre paliers 141, 142, 143 et 144. Chacun de ces paliers possède un trou 156, 157, 158 et 159 pour le montage du tube mince 160, qui est muni de prédécoupes 161 et 162. L'embase 145 est munie de deux tenons 146 et 147 avec un trou 148 et 149, qui s'engagent dans les deux trous évasés 152 et 153. L'extrémité de chacun des tenons 146 et 147 est rabattue sur l'évasement 154 et 155 des trous 152 et 153 pour obtenir l'évasement 150 et 151.

L'axe d'accrochage 7 comprend trois encoches semi-circulaires 117, 118, 119 aménagées au bord de la portion de raccordement 20 appartenant à l'extrémité 39 du support mobile 9, chaque encoche 117, 118, 119 recevant l'extrémité libre 107, 108, 109 de l'enroulement correspondant 101, 102, 103, ladite extrémité libre se recourbant dans l'encoche correspondante.

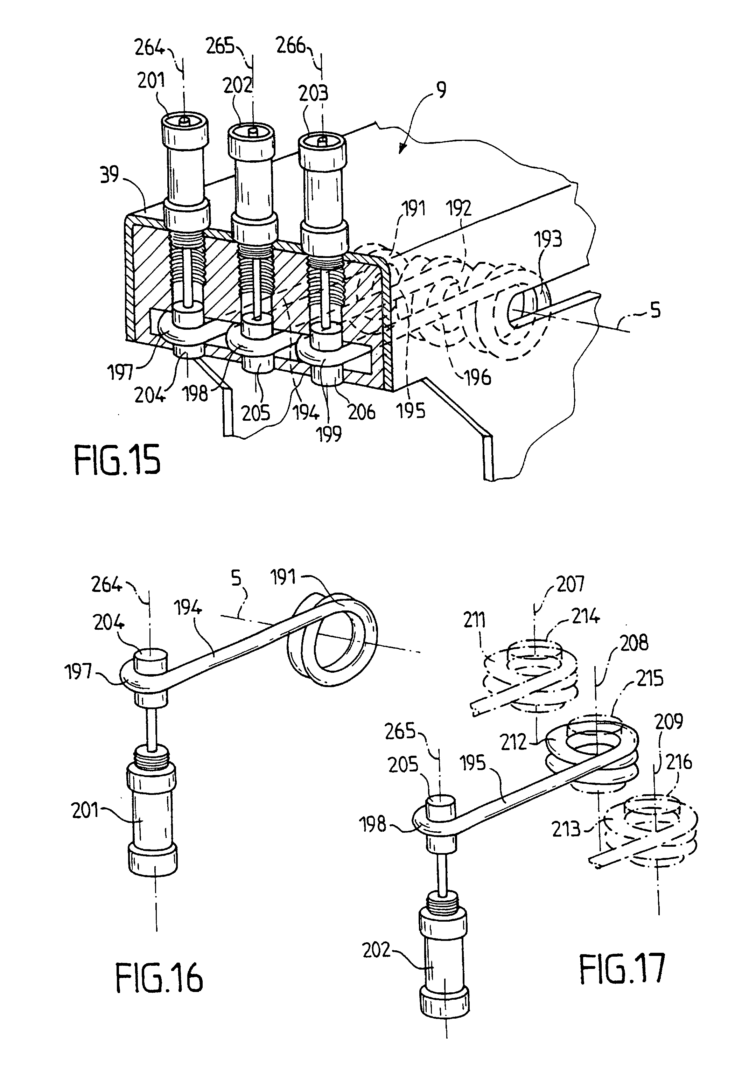

Le mode de réalisation représenté sur la figure 15 se rapporte à un dispositif d'absorption d'énergie modulable, qui est agencé à l'extrémité 39 du support mobile 9.

Ce dispositif comprend trois enroulements 191, 192 et 193, qui ont une tenue horizontale et un accrochage vertical. Les trois enroulements 191, 192 et 193 sont montés sur un rouleau 50, qui est disposé autour d'un axe de tenue 5 sensiblement horizontal. L'ensemble de tenue des enroulements peut être similaire à celui représenté sur la figure 3. Chaque enroulement 191, 192 et 193 comprend une portion rectiligne correspondante 194, 195 et 196, qui a sensiblement la même direction que l'effort à amortir et qui se prolonge par une extrémité libre 197, 198 et 199, recourbée autour d'un axe d'accrochage 264, 265 et 266. Chaque axe d'accrochage est constitué par une tige de maintien mobile 204, 205 et 206, sensiblement verticale.

Les tiges de maintien mobiles 204, 205 et 206 ont chacune un actionneur pyrotechnique 201, 202 et 203, qui est fixé dans la portion de raccordement 20 du support mobile 9, à l'aide d'une partie filetée. Les actionneurs pyrotechniques sont disposés au-dessus du support mobile 9.

Dans le mode de réalisation représenté sur la figure 16, les actionneurs pyrotechniques 201, 202 et 203 sont disposés au-dessous du support mobile 9. Les enroulements 191, 192 et 193 sont disposés de la même façon que sur la figure 15.

Le dispositif d'absorption modulable d'énergie représenté sur la figure 17 comprend trois enroulements 211, 212 et 213, qui ont une tenue verticale et un accrochage vertical. Les trois enroulements 211, 212 et 213 sont montés chacun sur un rouleau correspondant 214, 215 et 216, qui est disposé autour d'un axe de tenue sensiblement vertical correspondant 207, 208 et 209. Chaque enroulement 211, 212 et 213 comprend une partie rectiligne correspondante 194, 195 et 196, qui a sensiblement la même direction que l'effort à amortir et qui se prolonge par une extrémité libre 197, 198 et 199, recourbée autour d'un axe d'accrochage 264, 265 et 266. Chaque axe d'accrochage est constitué par une tige de maintien mobile 204, 205 et 206, qui est sensiblement verticale. Les tiges de maintien mobiles 204, 205 et 206 ont chacune un actionneur pyrotechnique 201, 202 et 203, qui est fixé dans la portion de raccordement 20 du support mobile 9, à l'aide d'une partie filetée. Les actionneurs pyrotechniques sont disposés au-dessous du support mobile 9 ; ils peuvent aussi être disposés au-dessus comme sur la figure 15.

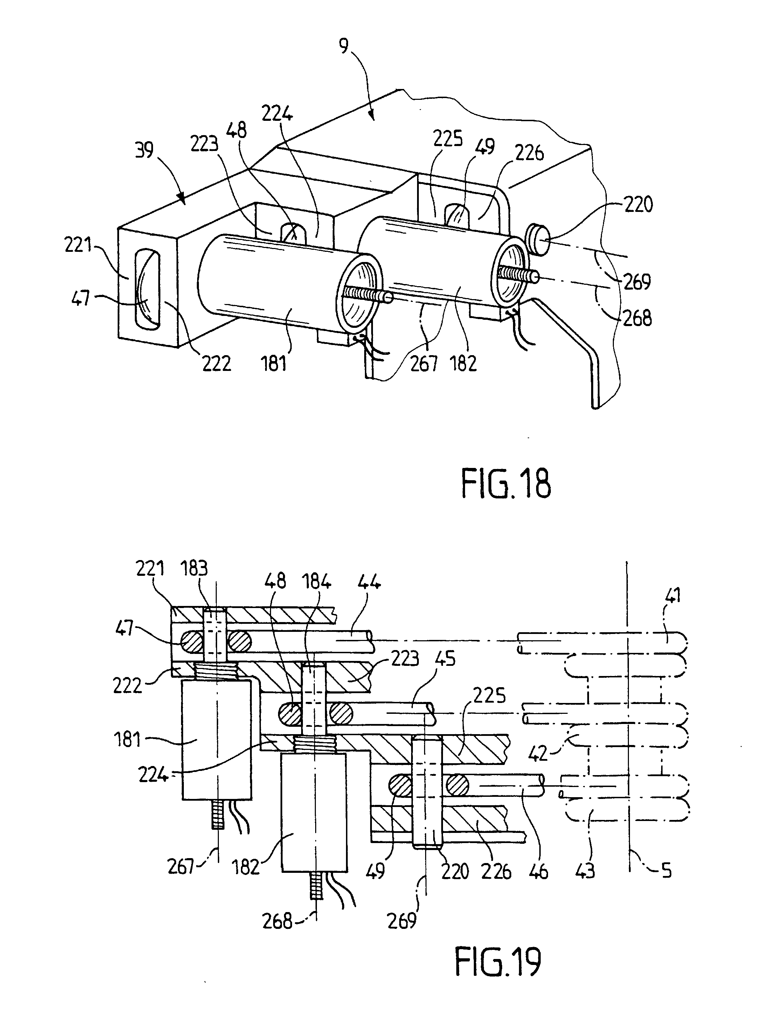

Le mode de réalisation représenté sur les figures 18 et 19 se rapporte à un dispositif d'absorption d'énergie modulable, qui est agencé à l'extrémité 39 du support mobile 9. Ce dispositif comprend trois enroulements 41, 42 et 43, qui ont une tenue horizontale et un accrochage horizontal. Les trois enroulements 41, 42 et 43 sont montés sur un rouleau 50, qui est disposé autour d'un axe de tenue 5 sensiblement horizontal. L'ensemble de tenue des enroulements peut être similaire à celui représenté sur la figure 3. Chaque enroulement 41, 42 et 43 comprend une portion rectiligne 44, 45 et 46, qui a sensiblement la même direction que l'effort à amortir et qui se prolonge par une extrémité libre 47, 48 et 49 recourbée autour d'un axe d'accrochage 267, 268 et 269, sensiblement horizontal. Un axe d'accrochage 269 est constitué par une tige de maintien fixe 220, qui est supportée par deux paliers 225 et 226. Les deux autres axes d'accrochage 267 et 268 sont constitués chacun par une tige de maintien mobile 183 et 184, qui est supportée par deux paliers correspondants 221, 222 et 223, 224. Les tiges de maintien mobiles 183 et 184 ont chacune un actionneur pyrotechnique 181, 182, qui est fixé sur la paroi du palier correspondant 222, 224.

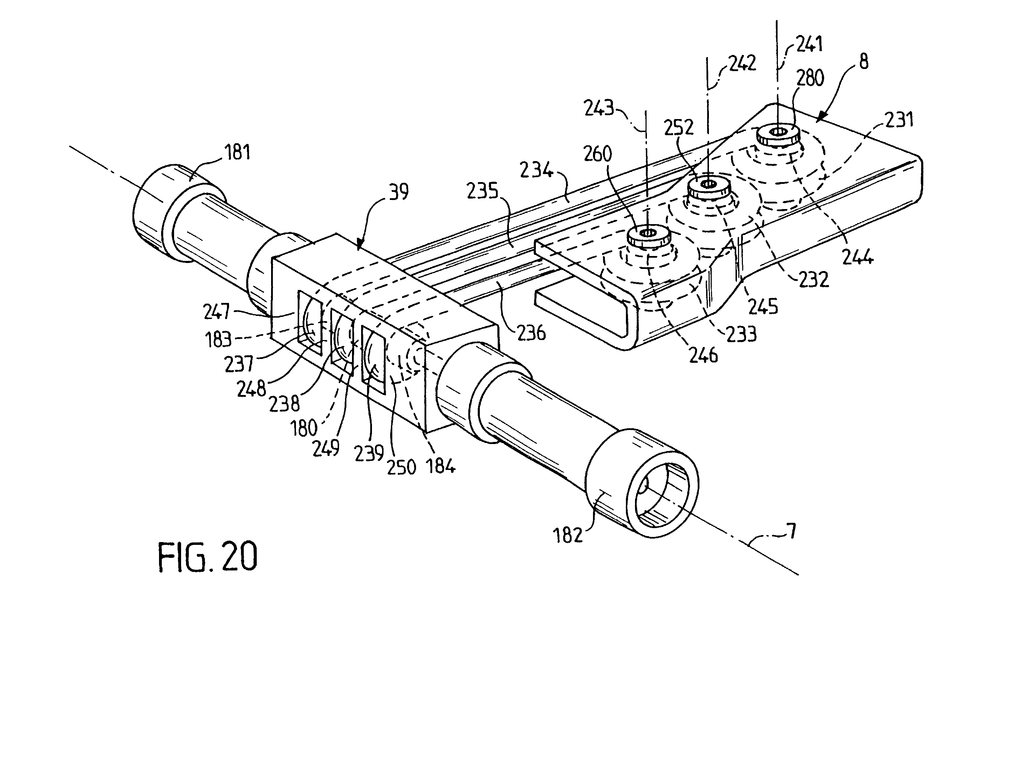

En combinant la tenue verticale des enroulements représentés sur la figure 20 et l'accrochage horizontal représenté sur les figures 18 et 19, on obtient un autre mode de réalisation de l'invention, qui est agencé à l'extrémité 39 du support mobile 9, et sur une autre structure du support fixe 8, comprenant une section en U avec une portion latérale supérieure et une portion latérale inférieure. Trois enroulements 231, 232 et 233 sont montés chacun sur un rouleau correspondant 244, 245 et 246, qui est disposé autour d'un axe de tenue correspondant 241, 242 et 243 sensiblement vertical. Chaque enroulement 231, 232 et 233 comprend une portion rectiligne correspondante 44, 45 et 46, qui a sensiblement la même direction que l'effort à amortir et qui se prolonge par une extrémité libre 47, 48 et 49, recourbée autour d'un axe d'accrochage 267, 268 et 269, sensiblement horizontal. Un axe d'accrochage 269 est constitué par une tige de maintien fixe 220, qui est supportée par deux paliers 225 et 226. Les deux autres axes d'accrochage 267 et 268 sont constitués chacun par une tige de maintien mobile 183, 184, qui est supportée par deux paliers 221, 222 et 223, 224. Les tiges de maintien mobiles 183 et 184 ont chacune un actionneur pyrotechnique 181, 182, qui est fixé sur la paroi du palier correspondant 222, 224.

Les modes de réalisation représentés sur les figures 20, 21 et 22 se rapportent à un dispositif d'absorption d'énergie modulable, qui est agencé à l'extrémité 39 du support mobile 9, et sur la structure du support fixe 8 qui comprend une section en U avec une portion latérale supérieure et une portion latérale inférieure. Les enroulements ont une tenue verticale et un accrochage horizontal.

Dans le mode de réalisation représenté sur la figure 20, trois enroulements 231, 232 et 233 sont montés chacun sur un rouleau correspondant 244, 245 et 246, qui est disposé autour d'un axe de tenue correspondant 241, 242 et 243 sensiblement vertical. Chaque enroulement 231, 232 et 233 comprend une portion rectiligne 234, 235 et 236, qui a sensiblement la même direction que l'effort à amortir et qui se prolonge par une extrémité libre 237, 238 et 239, recourbée autour d'un seul et même axe d'accrochage 7, qui est sensiblement horizontal. L'accrochage de l'enroulement central 232 a lieu sur une tige de maintien fixe 180, supportée par deux paliers centraux 248 et 249. L'accrochage de chaque enroulement latéral 231, 233 a lieu sur une tige de maintien mobile correspondante 183, 184, qui est supportée par un palier latéral correspondant 247, 250, et par le palier central correspondant 248, 249. Les tiges de maintien mobiles 183 et 184 ont chacune un actionneur pyrotechnique 181, 182, qui est fixé sur la paroi du palier correspondant 247, 250.

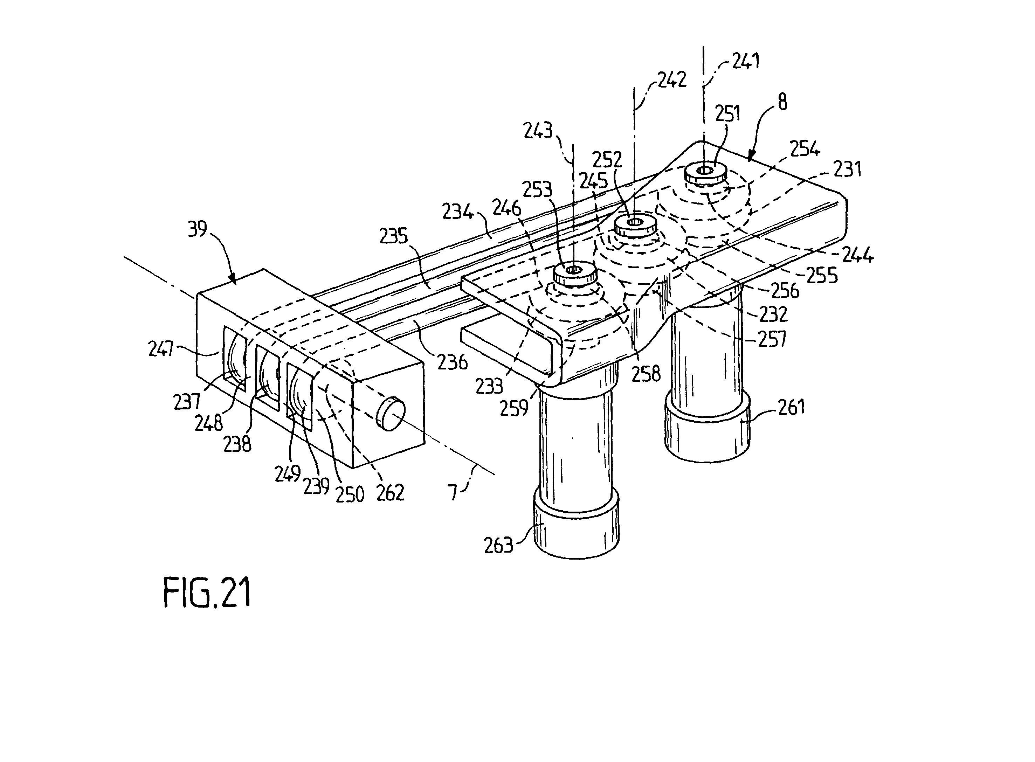

Dans le mode de réalisation représenté sur la figure 21, trois enroulements 231, 232 et 233 sont montés chacun sur un rouleau correspondant 244, 245 et 246, qui est disposé autour d'un axe de tenue correspondant 241, 242 et 243 sensiblement vertical. La tenue de l'enroulement central 232 est constituée par une tige de maintien fixe 252, qui est supportée par deux paliers centraux 256 et 257. La tenue de chaque enroulement latéral 231, 233 est constituée par une tige de maintien mobile correspondante 251, 253, qui est supportée par deux paliers latéraux correspondants 254, 255 et 258, 259. Chaque enroulement 231, 232 et 233 comprend une portion rectiligne correspondante 234, 235 et 236, qui a sensiblement la même direction que l'effort à amortir et qui se prolonge par une extrémité libre 237, 238 et 239, recourbée autour d'un seul et même axe d'accrochage 7, qui est sensiblement horizontal. L'accrochage a lieu sur une tige de maintien fixe 262, qui est supportée par deux paliers centraux 248 et 249, et par deux paliers latéraux 247 et 250. Les tiges de maintien mobiles 251 et 253 ont chacune un actionneur pyrotechnique correspondant 261, 263, qui est fixé en dessous et sur la portion latérale inférieure. Ils peuvent être aussi fixés au-dessus et sur la portion latérale supérieure. Le palier central 256 et les deux paliers latéraux 254 et 258 sont disposés dans la portion latérale supérieure. Le palier central 257 et les deux paliers latéraux 255 et 259 sont disposés dans la portion latérale inférieure.

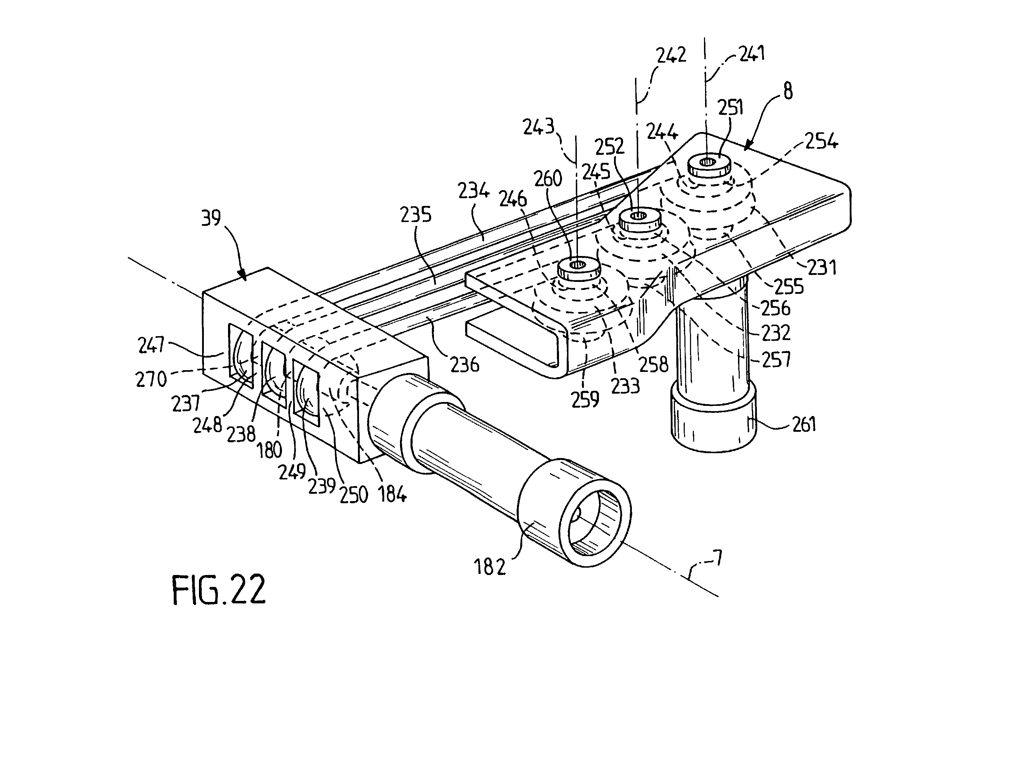

Dans le mode de réalisation représenté sur la figure 22, trois enroulements 231, 232 et 233 sont montés chacun sur un rouleau correspondant 244, 245 et 246, qui est disposé autour d'un axe de tenue correspondant 241, 242 et 243 sensiblement vertical. La tenue de l'enroulement central 232 a lieu sur une tige de maintien fixe 252, qui est supportée par deux paliers centraux 256 et 257. La tenue du premier enroulement latéral 231 a lieu sur une tige de maintien mobile 251, qui est supportée par deux paliers latéraux 254 et 255. La tenue du deuxième enroulement latéral 233 est constituée par une tige de maintien fixe 260, qui est supportée par deux paliers latéraux 258 et 259. Chaque enroulement 231, 232 et 233 comprend une portion rectiligne 234, 235 et 236, qui a sensiblement la même direction que l'effort à amortir et qui se prolonge par une extrémité libre 237, 238 et 239, recourbée autour d'un seul et même axe d'accrochage 7, qui est sensiblement horizontal. L'accrochage de l'enroulement central 232 a lieu sur une tige de maintien fixe 180, supportée par deux paliers centraux 248 et 249. L'accrochage du premier enroulement latéral 231 a lieu sur une tige de maintien fixe 270, qui est supportée par un palier latéral correspondant 247 et par le palier central correspondant 248. L'accrochage du deuxième enroulement latéral 233 a lieu sur une tige de maintien mobile 184 supportée par un palier latéral correspondant 250 et par le palier central correspondant 249. Les tiges de maintien mobiles 184 et 251 ont chacune un actionneur pyrotechnique 182, 261.

Dans les modes de réalisation représentés aux figures 18 à 22, les trois enroulements 41, 42, 43, etc... ont des parties rectilignes 44, 45, 46, etc... de longueurs différentes, avec des axes de tenue ou d'accrochage selon les cas qui sont axialement décalés les uns par rapport aux autres dans la direction de déplacement du support mobile 9. Ces différences de longueur des enroulements permettent de moduler de façon supplémentaire l'absorption d'énergie en cas de choc.

On peut aussi, d'une autre façon, moduler cette absorption en modifiant les sections des fils constituant les enroulements. Le choix du nombre d'enroulements utilisés pour l'absorption d'un choc et le choix des longueurs d'enroulement utilisées permettent d'adapter au mieux l'absorption d'énergie aux caractéristiques du choc subi.

Par ailleurs, un des avantages des actionneurs pyrotechniques qui sont utilisés pour la détermination du nombre et/ou de la longueur des enroulements concernés par l'absorption de l'énergie de choc, est la brièveté de leur temps de réponse. La commande d'un actionneur pyrotechnique permet donc de déplacer quasi-instantanément, en cas de choc, l'axe de tenue ou d'accrochage de l'enroulement correspondant qui est libéré et ne participe pas à l'absorption de l'énergie du choc.

## Revendications

1. Dispositif d'absorption modulable d'énergie pour colonne de direction de véhicule automobile, qui comprend un arbre de direction (1) monté tournant dans un tube corps (2) relié à un ensemble support (6) fixé au châssis (10) du véhicule,
cet ensemble (6) comprenant un support fixe (8) solidaire du châssis (10) du véhicule, et un support mobile (9) qui est relié et bloqué sur le support fixe (8) avec une force de serrage déterminée afin que ce blocage cesse en cas de choc ; **caractérisé en ce que** ledit système d'absorption modulable d'énergie comprend :
- au moins deux enroulements (41, 42, 43 ; 101, 102, 103 ; 191, 192, 193 ; 211, 212, 213 ; 231, 232, 233) d'un élément métallique de section déterminée, qui sont reliés au support fixe (8) et au support mobile (9) par un axe de tenue (5 ; 207, 208, 209 ; 241, 242, 243) et par un axe d'accrochage (7 ; 264, 265, 266 ; 267, 268, 269) respectivement ;
- les enroulements étant montés sur un ou des rouleaux (50 ; 111, 112, 113 ; 214, 215, 216 ; 244, 245, 246) disposés sur l'axe de tenue solidaire de l'élément support fixe (8) et comprenant chacun une portion rectiligne (44, 45, 46 ; 104, 105, 106 ; 194, 195, 196 ; 234, 235, 236) ayant sensiblement la même direction que l'effort à amortir, et une extrémité libre (47, 48, 49 ; 107, 108, 109 ; 197, 198, 199 ; 237, 238, 239) qui s'accroche sur l'axe d'accrochage correspondant disposé à une extrémité (29, 39) du support mobile (9) du côté du boîtier de direction, c'est-à-dire du côté opposé au volant de direction ;
- au moins un enroulement ayant son axe d'accrochage ou son axe de tenue constitué par une tige de maintien (183, 184 ; 187, 188 ; 204, 205, 206 ; 251, 253) déplaçable suivant son axe par des moyens de déplacement pyrotechniques (181, 182 ; 185, 186 ; 201, 202, 203 ; 261, 263) qui sont mis en action par des moyens de commande ;
- de manière qu'en cas de choc, le support mobile (9) soit relié au support fixe (8) par un nombre d'enroulements adapté à l'énergie à absorber.

2. Dispositif selon la revendication 1 , **caractérisé en ce que** :
- au moins un enroulement a son axe d'accrochage (7) constitué par une tige de maintien (184) déplaçable suivant son axe par des moyens de déplacement pyrotechniques (182) ; et
- au moins un enroulement a son axe de tenue (241) constitué par une tige de maintien (251) déplaçable suivant son axe par des moyens de déplacement pyrotechniques (261).

3. Dispositif selon une des revendications 1 à 2, **caractérisé en ce que** la tige de maintien déplaçable (183, 184, 187, 188) est sensiblement horizontale.

4. Dispositif selon une des revendications 1 à 3, **caractérisé en ce que** la tige de maintien déplaçable (204, 205, 206, 251, 253) est sensiblement verticale.

5. Dispositif selon la revendication 2, **caractérisé en ce que** :
- au moins un enroulement a son axe d'accrochage (7 ; 267, 268, 269) constitué par une tige de maintien déplaçable (183, 184) qui est sensiblement horizontale ; et
- au moins un enroulement a son axe de tenue (5) constitué par une tige de maintien déplaçable (187, 188) qui est sensiblement horizontale.

6. Dispositif selon la revendication 2, **caractérisé en ce que** :
- au moins un enroulement a son axe d'accrochage (264, 265, 266) constitué par une tige de maintien déplaçable (204, 205, 206) qui est sensiblement verticale ; et
- au moins un enroulement a son axe de tenue (241, 243) constitué par une tige de maintien déplaçable (251, 253) qui est sensiblement verticale.

7. Dispositif selon la revendication 2, **caractérisé en ce que** :
- au moins un enroulement a son axe d'accrochage (7 ; 267, 268, 269) constitué par une tige de maintien déplaçable (183, 184) qui est sensiblement horizontale ; et
- au moins un enroulement a son axe de tenue (241, 243) constitué par une tige de maintien déplaçable (251, 253) qui est sensiblement verticale.

8. Dispositif selon la revendication 2, **caractérisé en ce que** :
- au moins un enroulement a son axe d'accrochage (264, 265, 266) constitué par une tige de maintien déplaçable (204, 205, 206) qui est sensiblement verticale ;
- au moins un enroulement a son axe de tenue (5) constitué par une tige de maintien déplaçable (187, 188) qui est sensiblement horizontale.

9. Dispositif selon une des revendications 1 à 8, **caractérisé en ce que** trois enroulements (191, 192, 193) sont montés sur un rouleau (50), disposé autour d'un axe de tenue (5) et sont accrochés sur des tiges de maintien déplaçables (204, 205, 206) ayant chacune un actionneur pyrotechnique correspondant (201, 202, 203) qui est sensiblement vertical.

10. Dispositif selon une des revendications 1 à 8, **caractérisé en ce que** trois enroulements (41, 42, 43) sont montés sur un rouleau (50) disposé autour d'un axe de tenue (5) et sont accrochés l'un sur une tige de maintien fixe (220) supportée par deux paliers (225, 226), et les deux autres sur des tiges de maintien déplaçables correspondantes (183, 184) supportées par deux paliers (221, 222 ; 223, 224), et ayant chacune un actionneur pyrotechnique (181, 182).

11. Dispositif selon une des revendications 1 à 8, **caractérisé en ce que** trois enroulements (231, 232, 233) sont montés chacun sur un rouleau correspondant (244, 245, 246), disposé autour d'un axe de tenue correspondant (241, 242, 243) et sont accrochés l'un sur une tige de maintien fixe (220) supportée par deux paliers (225, 226), et les deux autres chacun sur une tige de maintien déplaçable correspondante (183, 184) supportée par deux paliers (221, 222 ; 223, 224), et ayant chacune un actionneur pyrotechnique (181, 182).

12. Dispositif selon la revendication 11, **caractérisé en ce que** l'enroulement (232) accroché sur une tige de maintien fixe est l'enroulement central.

13. Dispositif selon une des revendications 1 à 3, **caractérisé en ce que** trois enroulements (231, 232, 233) sont montés chacun sur un rouleau correspondant (244, 245, 246) disposé autour d'un axe de tenue correspondant (241, 242, 243) sensiblement vertical, la tenue de l'enroulement central (232) étant constituée par une tige de maintien fixe (252) supportée par deux paliers centraux (256, 257), et la tenue de chaque enroulement latéral (231, 233) étant constituée par une tige de maintien déplaçable (251, 253) supportée par deux paliers latéraux correspondants (254, 255 ; 258, 259), et ayant un actionneur pyrotechnique correspondant (261, 263), les trois enroulements (231, 232, 233) étant accrochés sur un seul et même axe d'accrochage (7) constitué par une tige de maintien fixe (262) supportée par deux paliers centraux (248, 249) et par deux paliers latéraux (247, 250).

14. Dispositif selon une des revendications 1 à 13, **caractérisé en ce que**
- le support fixe (8) comporte une embase (19) avec deux oreilles (11, 12) sensiblement verticales entre lesquelles vient s'engager le support mobile (9), chacune des oreilles (11, 12) ayant un trou de passage (13, 14) de l'axe de tenue (5) ;
- le support mobile (9) comporte deux parties latérales (21, 22) sensiblement verticales et une portion de raccordement (20) ;
- chacune des parties latérales (21, 22) ayant à sa partie supérieure un trou oblong (23, 24) de passage de l'axe de tenue (5), le trou oblong ayant une longueur correspondant à la course d'absorption d'énergie.

15. Dispositif selon la revendication 14, **caractérisé en ce que** l'axe de tenue (5) est constitué par une tige (52) avec un manchon (51) disposé entre les deux parties latérales (21, 22) du support mobile (9) ; ; ladite tige (52) est maintenue à chacune de ses deux extrémités (53, 54) par un ensemble de fixation dans l'oreille correspondante (11, 12) du support fixe (8), et par un ensemble de coulissement du support mobile (9) ; et chaque ensemble de fixation est bloqué sur chacune des oreilles (11, 12) avec une force déterminée.

16. Dispositif selon la revendication 15, **caractérisé en ce que** :
- chaque ensemble de fixation comprend une rondelle de serrage (57) disposée entre le manchon (51) et l'oreille correspondante (11, 12) du support fixe (8), ladite rondelle de serrage (57) comprenant un tube (58) traversant le trou oblong (23, 24) de la partie latérale (21, 22) correspondante du support mobile (9) ; et **en ce que** :
- une extrémité filetée (53, 54) correspondante de la tige (52) traverse le tube (58) de la rondelle de serrage (57) et le trou de passage (13, 14) de l'oreille correspondante (11, 12) pour recevoir un écrou (79) de serrage, qui s'applique sur ladite oreille (11, 12) afin d'assurer le blocage de l'ensemble de fixation à une valeur déterminée.

17. Dispositif selon la revendication 16, **caractérisé en ce que** :
- chaque ensemble de coulissement comporte une rondelle externe (61) avec une protubérance carrée (62) et une rondelle interne (59) munie d'un trou carré (60) qui reçoit ladite protubérance carrée (62) ;
- ladite protubérance carrée (62) a un trou de passage (63) du tube (58) de la rondelle de serrage (57) ;
- la rondelle externe (61) est disposée entre l'oreille (11, 12) correspondante du support fixe (8) et la partie latérale (21, 22) correspondante du support mobile (9) ;
- la rondelle interne (59) est disposée entre ladite partie latérale (21, 22) et la rondelle de serrage (57) ;
- la protubérance carrée (62) traverse et coulisse dans le trou oblong correspondant (23, 24) du support mobile (9).

18. Dispositif selon la revendication 15, **caractérisé en ce que** la tige (52) a une de ses deux extrémités constituée par une extrémité filetée (53) et l'autre extrémité constituée par une tête (179) s'appliquant sur l'oreille (12) correspondante du support fixe (8).

19. Dispositif selon la revendication 14, **caractérisé en ce que** :
- l'axe d'accrochage (7) est constitué par la tige de maintien fixe centrale (180) et les deux tiges de maintien déplaçables latérales (183, 184) chacune avec un actionneur pyrotechnique (181, 182), qui est disposé et fixé sur la face d'appui externe correspondante (73, 273) du support mobile (9) ;
- les tiges de maintien mobiles latérales (183, 184) traversent un trou de passage correspondant (37, 38) de chacune des parties latérales (21, 22) du support mobile (9), et sont supportées par des paliers correspondants (81, 82) appartenant à un étrier (80) monté et fixé sur la portion de raccordement (20), de l'extrémité (29) du support mobile (9) ;
- la tige de maintien fixe centrale (180) est supportée par les deux paliers (81, 82) ;
- un élément de fermeture (90) de l'étrier (80) entoure l'extrémité (29) du support mobile (9), l'étrier (80) et les extrémités libres (47, 48, 49) des enroulements (41, 42, 43), ledit élément de fermeture (90) étant assemblé avec le support mobile (9) et l'étrier (80).

20. Dispositif selon la revendication 14, **caractérisé en ce que** :
- l'axe de tenue (5) est constitué par une tige de maintien fixe centrale (189), et par deux tiges de maintien déplaçables latérales (187, 188) ayant chacune un actionneur pyrotechnique (185, 186) ;
deux rouleaux (111, 113) étant montés sur un tube mince (160) dans lequel coulissent les tiges de maintien déplaçables latérales (187, 188), et un rouleau (112) étant monté sur la tige de maintien fixe centrale (189), qui est montée sur le tube mince (160).

21. Dispositif selon la revendication 20, **caractérisé en ce que** :
- chacune des deux tiges de maintien déplaçables latérales (187, 188) comprend un actionneur pyrotechnique (185, 186) disposé et fixé sur la face externe (17, 18) de l'oreille correspondante (11, 12) du support fixe (8) ;
- l'axe de tenue (5) comprend à chacune de ses extrémités un ensemble de fixation dans l'oreille correspondante (11, 12) du support fixe (8), et un ensemble de coulissement de la partie latérale (21, 22) correspondante du support mobile (9) ; chaque ensemble de fixation étant bloqué sur chacune des oreilles (11, 12) avec une force de serrage déterminée ;
- chacune des tiges de maintien latérales déplaçables traverse ou s'engage dans l'ensemble de fixation correspondant.

22. Dispositif selon la revendication 21, **caractérisé en ce que** :
- chaque ensemble de fixation comprend un tube métallique (121) qui traverse le trou oblong (23, 24) de la partie latérale (21, 22) correspondante du support mobile (9), et qui traverse le trou de passage (13, 14) de l'oreille (11, 12) correspondante ;
- un évasement interne (122) est agencé du côté de ladite partie latérale (21, 22) et un évasement externe (123) est agencé du côté de ladite oreille (11, 12) afin d'assurer le blocage de l'ensemble de fixation.

23. Dispositif selon la revendication 22, **caractérisé en ce que** :
- chaque ensemble de coulissement comporte une rondelle externe (131) avec une demie protubérance carrée (132) et un trou de passage (133) ; et une rondelle interne (125) avec une demie protubérance carrée (126) et un trou de passage (127);
- chaque demie protubérance (126, 132) s'emboîtant dans l'autre rondelle (131, 125) à l'aide de tenons (128, 134) rentrant dans des trous (129, 135) pour former une protubérance carrée ;
- la rondelle externe (131) est disposée entre l'oreille (11, 12) correspondante du support fixe (8) et la partie latérale (21, 22) correspondante du support mobile (9) ;
- la rondelle interne (125) est disposée entre ladite partie latérale (21, 22) et l'évasement interne (122) du tube métallique (121) ;
- la protubérance carrée traverse et coulisse dans le trou oblong (23, 24) correspondant de la partie latérale (21, 22) du support mobile (9).

24. Dispositif selon la revendication 23, **caractérisé en ce que** le tube (160) est supporté par quatre paliers (141, 142, 143, 144) appartenant à un étrier (140) monté et fixé sous l'embase (19) du support fixe (8).

25. Dispositif selon une des revendications 20 à 24, **caractérisé en ce que** l'axe d'accrochage (7) comprend trois encoches demi-circulaires (117, 118, 119) aménagées au bord de la portion de raccordement (20) appartenant à l'extrémité (39) du support mobile (9), chaque encoche (117, 118, 119) recevant l'extrémité libre (107, 108, 109) d'un enroulement précité (101, 102, 103).

## Patentansprüche

1. Einstellbare Energieabsorptionsvorrichtung für eine Kraftfahrzeuglenksäule, die eine Lenkwelle (1) umfaßt, die in einem mit einer am Fahrgestell (10) des Fahrzeugs angebrachten Haltereinheit (6) verbundenen Rohrkörper (2) drehbar gelagert ist,
wobei diese Einheit (6) einen mit dem Fahrgestell (10) des Fahrzeugs verbundenen festen Halter (8) und einen beweglichen Halter (9) umfaßt, der mit dem festen Halter (8) verbunden und auf diesem mit einer bestimmtem Klemmkraft verriegelt ist, damit die Verriegelung im Fall eines Aufpralls endet;
**dadurch gekennzeichnet, daß** das einstellbare Energieabsorptionssystem umfaßt:
- wenigstens zwei Wicklungen (41, 42, 43; 101, 102, 103; 191, 192, 193; 211, 212, 213; 231, 232, 233) eines Metallelements mit bestimmtem Querschnitt, die mit dem festen Halter (8) und mit dem beweglichen Halter (9) durch eine Halteachse (5; 207, 208, 209; 241, 242, 243) und durch eine Kuppelachse (7; 264, 265, 266; 267, 268, 269) jeweils verbunden sind;
- wobei die Wicklungen auf einer oder auf Rollen (50; 111, 112, 113; 214, 215, 216; 244, 245, 246) gelagert sind, die auf der mit dem festen Halterelement (8) verbundenen Halteachse angeordnet sind und jeweils einen geradlinigen Abschnitt (44, 48, 46; 104, 105, 106; 194, 195, 196; 234, 235, 236) mit etwa derselben Richtung wie der zu dämpfende Effekt und ein freies Ende (47, 48, 49; 107, 108, 109; 197, 198, 199; 237, 238, 239) umfassen, das sich an der entsprechenden Kuppelachse anhängt, die an einem Ende (29, 39) des beweglichen Halters (9) auf der Seite des Lenkgehäuses, d.h. auf der dem Lenkrad gegenüberliegenden Seite, angeordnet ist;
- wobei die Kuppelachse oder die Halteachse wenigstens einer Wicklung aus einer Haltestange (183, 184; 187, 188; 204, 205, 206; 251, 253) besteht, die gemäß ihrer Achse durch pyrotechnische Verstellmittel (181, 182; 185, 186; 201, 202, 203; 261, 263) verstellbar ist, die durch Betätigungsmittel in Gang gesetzt werden;
- derart, daß der bewegliche Halter (9) im Fall eines Aufpralls durch eine an die zu absorbierende Energie angepaßte Anzahl von Wicklungen mit dem festen Halter (8) verbunden wird.

2. Vorrichtung nach Anspruch 1, **dadurch gekennzeichnet, daß**
- die Kuppelachse (7) wenigstens einer Wicklung aus einer Haltestange (184) besteht, die gemäß ihrer Achse durch pyrotechnische Verstellmittel (282) verstellbar ist;
- die Halteachse (241) wenigstens einer Wicklung aus einer Haltestange (251) besteht, die gemäß ihrer Achse durch pyrotechnische Verstellmittel (261) verstellbar ist.

3. Vorrichtung nach einem der Ansprüche 1 bis 2, **dadurch gekennzeichnet, daß** die verstellbare Haltestange (183, 184, 187, 188) etwa horizontal ist.

4. Vorrichtung nach einem der Ansprüche 1 bis 3, **dadurch gekennzeichnet, daß** die verstellbare Haltestange (204, 205, 206, 251, 253) etwa vertikal ist.

5. Vorrichtung nach Anspruch 2, **dadurch gekennzeichnet, daß**
- die Kuppelachse (7; 267, 268, 269) wenigstens einer Wicklung aus einer verstellbaren Haltestange (183, 184) besteht, die etwa horizontal ist; und
- die Halteachse (5) wenigstens einer Wicklung aus einer verstellbaren Haltestange (187, 188) besteht, die etwa horizontal ist.

6. Vorrichtung nach Anspruch 2, **dadurch gekennzeichnet, daß**
- die Kuppelachse (264, 265, 266) wenigstens einer Wicklung aus einer verstellbaren Haltestange (204, 205, 206) besteht, die etwa vertikal ist; und
- die Halteachse (241, 243) wenigstens einer Wicklung aus einer verstellbaren Haltestange (251, 253) besteht, die etwa vertikal ist.

7. Vorrichtung nach Anspruch 2, **dadurch gekennzeichnet, daß**
- die Kuppelachse (7; 267, 268, 269) wenigstens einer Wicklung aus einer verstellbaren Haltestange (183, 184) besteht, die etwa horizontal ist; und
- die Halteachse (241, 243) wenigstens einer Wicklung aus einer verstellbaren Haltestange (251, 253) besteht, die etwa vertikal ist.

8. Vorrichtung nach Anspruch 2, **dadurch gekennzeichnet, daß**
- die Kuppelachse (264, 265, 266) wenigstens einer Wicklung aus einer verstellbaren Haltestange (204, 205, 206) besteht, die etwa vertikal ist;
- die Halteachse (5) wenigstens einer Wicklung aus einer verstellbaren Haltestange (187, 188) besteht, die etwa horizontal ist.

9. Vorrichtung nach einem der Ansprüche 1 bis 8, **dadurch gekennzeichnet, daß** drei Wicklungen (191, 192, 193) auf einer Rolle (50) angebracht sind, die um eine Halteachse (5) angeordnet ist, und auf verstellbaren Haltestangen (204, 205, 206) angehängt sind, die jeweils eine entsprechende pyrotechnische Betätigungseinrichtung (201, 202, 203) aufweisen, die etwa vertikal ist.

10. Vorrichtung nach einem der Ansprüche 1 bis 8, **dadurch gekennzeichnet, daß** drei Wicklungen (41, 42, 43) auf einer um eine Halteachse (5) herum angeordneten Rolle (50) angebracht sind und eine auf einer festen Haltestange (220) angehängt ist, die von zwei Lagern (225, 226) gehaltert ist, und die beiden anderen auf verstellbaren entsprechenden Haltestangen (183, 184) angehängt sind, die von zwei Lagern (221, 222; 223, 224) gehaltert sind, und jeweils eine pyrotechnische Betätigungseinrichtung (181, 182) aufweisen.

11. Vorrichtung nach einem der Ansprüche 1 bis 8, **dadurch gekennzeichnet, daß** die drei Wicklungen (231, 232, 233) jeweils auf einer entsprechenden Rolle (244, 245, 246) angebracht sind, die um eine entsprechende Halteachse (241, 242, 243) herum angeordnet ist, und eine auf einer festen Haltestange (220) angehängt ist, die von zwei Lagern (225, 226) gehaltert ist, und die beiden anderen jeweils auf einer verstellbaren entsprechenden Haltestange (183, 184) angehängt sind, die von zwei Lagern (221, 222; 223, 224) gehaltert ist, und jeweils eine pyrotechnische Betätigungseinrichtung (181, 182) aufweisen.

12. Vorrichtung nach Anspruch 11, **dadurch gekennzeichnet, daß** die auf einer festen Haltestange angehängte Wicklung (232) die zentrale Wicklung ist.

13. Vorrichtung nach einem der Ansprüche 1 bis 3, **dadurch gekennzeichnet, daß** drei Wicklungen (231, 232, 233) jeweils auf einer entsprechenden Rolle (244, 245, 246) angebracht sind, die um eine entsprechende etwa vertikale Halteachse (241, 242, 243) angeordnet ist, wobei die Halterung der zentralen Wicklung (232) aus einer festen Haltestange (252) besteht, die von zwei zentralen Lagern (256, 257) gehaltert ist, und die Halterung jeder seitlichen Wicklung (231, 233) aus einer verstellbaren Haltestange (251, 253) besteht, die von zwei entsprechenden seitlichen Lagern (254, 255; 258, 259) gehaltert ist, und eine entsprechende pyrotechnische Betätigunseinrichtung (261, 263) aufweisen, wobei die drei Wicklungen (231, 232, 233) auf ein und derselben Kuppelachse (7) anhängt sind, die aus einer festen Haltestange (262) besteht, die von zwei zentralen Lagern (248, 249) und von zwei seitlichen Lagern (247, 250) gehaltert ist.

14. Vorrichtung nach einem der Ansprüche 1 bis 13, **dadurch gekennzeichnet, daß**
- die feste Halterung (8) ein Befestigungsteil (19) mit zwei etwa vertikalen Ansatzstücken (11, 12) umfaßt, zwischen denen die bewegliche Halterung (9) in Eingriff gelangt, wobei jedes der Ansatzstücke (11, 12) ein Durchgangsloch (13, 14) für die Halteachse (5) aufweist;
- die bewegliche Halterung (9) zwei etwa vertikale Seitenteile (21, 22) und einen Verbindungsabschnitt (20) umfaßt;
- wobei die Seitenteile (21, 22) jeweils an ihrem oberen Teil ein Langloch (23, 24) für die Durchführung der Halteachse (5) aufweisen, wobei das Langloch eine Länge entsprechend dem Energieabsorptionshub aufweist.

15. Vorrichtung nach Anspruch 14, **dadurch gekennzeichnet , daß** die Halteachse (5) aus einer Stange (52) mit einer zwischen den beiden Seitenteilen (21, 22) der beweglichen Halterung (9) angeordneten Hülse (51) besteht; die Stange (52) an jedem ihrer beiden Enden (53, 54) durch eine Befestigungseinheit im entsprechenden Ansatzstück (11, 12) der festen Halterung (8) und durch eine Gleiteinheit der beweglichen Halterung (9) gehalten ist; und jede Befestigungseinheit auf jedem der Ansatzstücke (11, 12) mit einer bestimmten Kraft verriegelt ist.

16. Vorrichtung nach Anspruch 15, **dadurch gekennzeichnet, daß**
- jede Befestigseinheit eine zwischen der Hülse (51) und dem entsprechenden Ansatzstück (11, 12) der festen Halterung (8) angeordnete Klemmscheibe (57) umfaßt, wobei die Klemmscheibe (57) ein das Langloch (23, 24) des entsprechenden Seitenteils (21, 22) der beweglichen Halterung (9) durchquerendes Rohr (58) umfaßt; und daß
- ein entsprechendes gewindeversehenes Ende (53, 54) der Stange (52) das Rohr (58) der Klemmscheibe (57) und das Durchgangsloch (13, 14) des entsprechenden Ansatzstücks (11, 12) durchquert, um eine Druckmutter (79) aufzunehmen, die das Ansatzstück (11, 12) beaufschlagt, um die Verriegelung der Befestigungseinheit mit einem bestimmten Wert sicherzustellen.

17. Vorrichtung nach Anspruch 16, **dadurch gekennzeichnet, daß**
- jede Gleiteinheit eine Außenscheibe (61) mit einem Vierkantvorsprung (62) und eine Innenscheibe (59) umfaßt, die mit einem Vierkantloch (60) versehen ist, das den Vierkantvorsprung (62) aufnimmt;
- der Vierkantvorsprung (62) ein Durchgangsloch (63) für das Rohr (58) der Klemmscheibe (57) aufweist;
- die Außenscheibe (61) zwischen dem entsprechenden Ansatzstück (11, 12) der festen Halterung (8) und dem entsprechenden Seitenteil (21, 22) der beweglichen Halterung (9) angeordnet ist;
- die Innenscheibe (59) zwischen dem Seitenteil (21, 22) und der Klemmscheibe (57) angeordnet ist;
- der Vierkantvorsprung (62) das entsprechnde Langloch (23, 24) der beweglichen Halterung (9) durchquert und in diesem gleitet.

18. Vorrichtung nach Anspruch 15, **dadurch gekennzeichnet, daß** eines der beiden Enden der Stange (52) aus einem gewindeversehenen Ende (53) besteht und das andere Ende aus einem Kopf (179) besteht, der das entsprechende Ansatzstück (12) der festen Halterung (8) beaufschlagt.

19. Vorrichtung nach Anspruch 14, **dadurch gekennzeichnet, daß**
- die Kuppelachse (7) aus der zentralen festen Haltestange (180) und den beiden verstellbaren seitlichen Haltestangen (183, 184), jeweils mit einer pyrotechnischen Betätigungseinrichtung (181, 182), besteht, die auf der entsprechenden Auflageseite (73, 273) der beweglichen Halterung angeordnet und befestigt ist;
- die beweglichen seitlichen Haltestangen (183, 184) ein entsprechendes Durchgangsloch (37, 38) jedes der Seitenteile (21, 22) der beweglichen Halterung (9) durchqueren und durch entsprechende Lager (81, 82) gehaltert sind, die zu einem auf dem Verbindungsabschnitt (20) angebrachten und befestigten Bügel (80) des Endes (29) der beweglichen Halterung (9) gehören;
- die zentrale feste Haltestange (180) von den beiden Lagern (81, 82) gehaltert ist;
- ein Schließelement (90) des Bügels (80) das Ende (29) der beweglichen Halterung (9), den Bügel und die freien Enden (47, 48, 49) der Wicklungen (41, 42, 43) umgibt, wobei das Schließelement (90) mit der beweglichen Halterung (9) und dem Bügel (80) montiert ist.

20. Vorrichtung nach Anspruch 14, **dadurch gekennzeichnet, daß**
- die Halteachse (5) aus einer zentralen festen Haltestange (189) und aus zwei verstellbaren seitlichen Haltestangen (187, 188) jeweils mit einer pyrotechnischen Betätigungseinrichtung (185, 186) besteht;
wobei die beiden Wicklungen (111, 113) auf einem dünnen. Rohr (160) angebracht sind, in dem die verstellbaren seitlichen Haltestangen (187, 188) gleiten, und wobei eine Rolle (112) auf der zentralen festen Haltestange (189) angebracht ist, die auf dem dünnen Rohr (160) angebracht ist.

21. Vorrichtung nach Anspruch 20, **dadurch gekennzeichnet, daß**
- jede der beiden verstellbaren seitlichen Haltestangen (187, 188) eine pyrotechnische Betätigungseinrichtung (185, 186) umfaßt, die auf der Außenseite (17, 18) des entsprechenden Ansatzstücks (11, 12) der festen Halterung (8) angeordnet und befestigt ist;
- die Halteachse (5) an jedem ihrer Enden eine Befestigungseinheit in dem entsprechenden Ansatzstück (11, 12) der festen Halterung (8) und eine Gleiteinheit des entsprechenden Seitenteils (21, 22) der beweglichen Halterung (9) umfaßt;
wobei jede Befestigungseinheit auf jedem der Ansatzstücke (11, 12) mit einer bestimmten Klemmkraft verriegelt ist;
- jede der verstellbaren seitlichen Haltestangen die entsprechende Befestigungseinheit durchquert oder in diese eingreift.

22. Vorrichtung nach Anspruch 21, **dadurch gekennzeichnet, daß**
- jede Befestigunseinheit ein Metallrohr (121) umfaßt, das das Langloch (23, 24) des entsprechenden Seitenteils (21, 22) der beweglichen Halterung (9) durchquert und das das Durchgangsloch (13, 14) des entsprechenden Ansatzstücks (11, 12) durchquert;
- eine Innenaufweitung (122) auf der Seite des Seitenteils (21, 22) vorgesehen ist und eine Außenaufweitung (123) auf der Seite des Ansatzstücks (11, 12) vorgesehen ist, um die Verriegelung der Befestigungseinheit sicherzustellen.

23. Vorrichtung nach Anspruch 22, **dadurch gekennzeichnet, daß**
- jede Gleiteinheit eine Außenscheibe (131) mit einem Halbvierkantvorsprung (132) und einem Durchgangsloch (133); und eine Innenscheibe (125) mit einem Halbvierkantvorsprung (126) und einem Durchgangsloch (127) umfaßt;
- wobei jeder Halbvorsprung (126, 132) in die andere Scheibe (131, 125) mittels Zapfen (128, 134) einpaßt, die in Löcher (129, 135) stoßen, um einen Vierkantvorsprung zu bilden;
- die Außenscheibe (131) zwischen dem entsprechenden Ansatzstück (11, 12) der festen Halterung (8) und dem entsprechenden Seitenteil (21, 22) der beweglichen Halterung (9) angeordnet ist;
- die Innenscheibe (125) zwischen dem Seitenteil (21, 22) und der Innenaufweitung (122) des Metallrohrs (121) angeordnet ist;
- der Vierkantvorsprung das entsprechende Langloch (23, 24) des Seitenteils (21, 22) der beweglichen Halterung (9) durchquert und in diesem gleitet.

24. Vorrichtung nach Anspruch 23, **dadurch gekennzeichnet, daß** das Rohr (160) durch vier Lager (141, 142, 143, 144) gehaltert ist, die zu einem unterhalb des Befestigungsteils (19) der festen Halterung (8) angebrachten und befestigten Bügel (140) gehören.

25. Vorrichtung nach einem der Ansprüche 20 bis 24, **dadurch gekennzeichnet, daß** die Kuppelachse (7) drei halbkreisförmige Ausparungen (117, 118, 119) umfaßt, die am Rand des zu dem Ende (39) der beweglichen Halterung (9) gehörenden Verbindungsabschnitts (20) angeordnet sind, wobei jede Aussparung (117, 118, 119) das freie Ende (107, 108, 109) einer vorgenannten Wicklung (101, 102, 103) aufnimmt.

## Claims

1. A modulatable device for absorbing energy from an automobile vehicle steering column, which includes a steering shaft (1) rotatably mounted in a body-tube (2) connected to a support assembly (6) fixed to the chassis (10) of the vehicle,
this support assembly (6) comprising a fixed support (8) fastened to the chassis (10) of vehicle, and a mobile support (9) which is connected to and locked to the fixed support (8) with a particular clamping force such that the locking ceases in the event of an impact; **characterized in that** said modulatable device for absorbing energy comprises:
- at least two coils (41, 42, 43; 101, 102, 103; 191, 192, 193; 211, 212, 213; 231, 232, 233) of a metal member with a particular section, which are connected to the fixed support (8) and to the mobile support (9) by a retaining pin (5; 207, 208, 209; 241, 242, 243) and by an attachment pin (7; 264, 265, 266; 267, 268, 269) respectively;
- the coils being mounted on one or more rollers (50; 111, 112, 113; 214, 215, 216; 244, 245, 246) disposed on the retaining pin fastened to the fixed support member (8) and each having a rectilinear portion (44, 45, 46; 104, 105, 106; 194, 195, 196; 234, 235, 236) in substantially the same direction as the force to be damped, and a free end (47, 48, 49; 107, 108, 109; 197, 198, 199; 237, 238, 239) which is attached to the corresponding attachment pin disposed at one end (29, 39) of the mobile support (9) at the same end as the steering rack, i.e. at the opposite end to the steering wheel;
- at least one coil having one of its attachment pin or its retaining pin in the form of a holding rod (183, 184; 187, 188; 204, 205, 206; 251, 253) movable along its axis by pyrotechnic displacement means (181, 182; 185, 186; 201, 202, 203; 261, 263) which are actuated by actuator means,
- so that in the event of an impact, the mobile support (9) is connected to the fixed support (8) by a number of coils matching the energy to be absorbed.

2. The device according to claim 1, **characterized in that**:
- the attachment pin (7) of at least one coil is a holding rod (184) movable along its axis by pyrotechnic displacement means (182); and
- the retaining pin (241) of at least one coil is a holding rod (251) movable along its axis by pyrotechnic displacement means (261).

3. The device according to one of claims 1 to 2, **characterized in that** the movable holding rod (183, 184, 187, 188) is substantially horizontal.

4. The device according to one of claims 1 to 3, **characterized in that** the movable holding rod (204, 205, 206, 251, 253) is substantially vertical.

5. The device according to claim 2, **characterized in that**:
- the attachment pin (7; 267, 268, 269) of at least one coil is a movable holding rod (183, 184) which is substantially horizontal; and
- the retaining pin (5) of at least one coil is a movable holding rod (187, 188) which is substantially horizontal.

6. The device according to claim 2, **characterized in that**:
- the attachment pin (264, 265, 266) of at least one coil is a movable holding rod (204, 205, 206) which is substantially vertical; and
- the retaining pin (241, 243) of at least one coil is a movable holding rod (251, 253) which is substantially vertical.

7. The device according to claim 2, **characterized in that**:
- the attachment pin (7; 267, 268, 269) of at least one coil is a movable holding rod (183, 184) which is substantially horizontal; and
- the retaining pin (241, 243) of at least one coil is a movable holding rod (251, 253) which is substantially vertical.

8. The device according to claim 2, **characterized in that**:
- the attachment pin (264, 265, 266) of at least one coil is a movable holding rod (204, 205, 206) which is substantially vertical; and
- the retaining pin (5) of at least one coil is a movable holding rod (187, 188) which is substantially horizontal.

9. The device according to any of claims 1 to 8, **characterized in that** three coils (191, 192, 193) are mounted on a roller (50) disposed around a retaining pin (5) and are attached to movable holding rods (204, 205, 206) each having a corresponding pyrotechnic actuator (201, 202, 203) which is substantially vertical.

10. The device according to one of claims 1 to 8, **characterized in that** three coils (41, 42, 43) are mounted on a roller (50) disposed around a retaining pin (5) and one of them is attached to a fixed holding rod (220) supported by two bearings (225, 226), and the other two are attached to corresponding movable holding rods (183, 184) supported by two bearings (221, 222; 223, 224), and each having a pyrotechnic actuator (181, 182).

11. The device according to one of claims 1 to 8, **characterized in that** three coils (231, 232, 233) are each mounted on a corresponding roller (244, 245, 246), disposed around a corresponding retaining pin (241, 242, 243) and one of the coils is attached to a fixed holding rod (220) supported by two bearings (225, 226), and the two other coils are each attached to corresponding movable holding rods (183, 184) supported by two bearings (221, 222; 223, 224), and each having a pyrotechnic actuator (181, 182).

12. The device according to claim 11, **characterized in that** the coil (232) attached to a fixed holding rod is the central coil.

13. The device according to one of claims 1 to 3, **characterized in that** three coils (231, 232, 233) are each mounted on a corresponding roller (244, 245, 246) disposed around a corresponding substantially vertical retaining pin (241, 242, 243), the central one (232) of the coils being retained by a fixed holding rod (252) supported by two central bearings (256, 257), and each lateral coil (231, 233) being retained by a movable holding rod (251, 253) supported by two corresponding lateral bearings (254, 255; 258, 259), and having a corresponding pyrotechnic actuator (261, 263), the three coils (231, 232, 233) being attached to a single attachment pin (7) consisting of a fixed holding rod (262) supported by two central bearings (248, 249) and two lateral bearings (247, 250).

14. The device according to one of claims 1 to 13, **characterized in that**
- the fixed support (8) includes a base (19) with two substantially vertical lugs (11, 12) between which the mobile support (9) is engaged, each of the lugs (11, 12) having a hole (13, 14) in it through which the retaining pin (5) passes;
- the mobile support (9) has two substantially vertical lateral parts (21, 22) and a connecting portion (20);
- each of the lateral parts (21, 22) has an oblong hole (23, 24) in its upper part through which the retaining pin (5) passes, the oblong hole having a length corresponding to the energy absorption travel.

15. The device according to claim 14, **characterized in that** the retaining pin (5) consists of a rod (52) with a sleeve (51) disposed between the two lateral parts (21, 22) of the mobile support (9); said rod (52) is held at each of its two ends (53, 54) by a fixing assembly in the corresponding lug (11, 12) of the fixed support (8), and by a sliding assembly of the mobile support (9); and each fixing assembly is locked onto each of the lugs (11, 12) with a determined force.

16. The device according to claim 15, **characterized in that**:
- each fixing assembly includes a clamping washer (57) disposed between the sleeve (51) and the corresponding lug (11, 12) of the fixed support (8), said clamping washer (57) including a tube (58) passing through the oblong hole (23, 24) in the corresponding lateral part (21, 22) of the mobile support (9); and **in that**:
- a corresponding threaded end (53, 54) of the rod (52) passes through the tube (58) of the clamping washer (57) and the hole (13, 14) through the corresponding lug (11, 12) to receive a clamping nut (79), which is applied to said lug (11, 12) in order to lock the fixing assembly at a particular value.

17. The device according to claim 16, **characterized in that**:
- each sliding assembly includes an external washer (61) with a square protuberance (62) and an internal washer (59) with a square hole (60) which receives said square protuberance (62);
- said square protuberance (62) has a hole (63) in it through which the tube (58) of the clamping washer (57) passes;
- the external washer (61) is disposed between the corresponding lug (11, 12) of the fixed support (8) and the corresponding lateral part (21, 22) of the mobile support (9);
- the internal washer (59) is disposed between said lateral part (21, 22) and the clamping washer (57);
- the square protuberance (62) passes through and slides in the corresponding oblong hole (23, 24) of the mobile support (9).

18. The device according to claim 15, **characterized in that** the rod (52) has one of its two ends threaded (53) and the other end consists of a head (179) applied to the corresponding lug (12) of the fixed support (8).

19. The device according to claim 14, **characterized in that**:
- the attachment pin (7) consists of a central fixed holding rod (180) and of two lateral movable holding rods (183, 184) each of which has a pyrotechnic actuator (181, 182), which is disposed on and fixed to the corresponding external bearing face (73, 273) of the mobile support (9);
- the lateral mobile holding rods (183, 184) pass through a corresponding hole (37, 38) in each of the lateral parts (21, 22) of the mobile support (9), and are supported by corresponding bearings (81, 82) which are part of a bracket (80) mounted on and fixed to the connecting portion (20), of the end (29) of the mobile support (9);
- the central fixed holding rod (180) is supported by the two bearings (81, 82);
- a closure member (90) of the bracket (80) surrounds the end (29) of the mobile support (9), the bracket (80) and the free ends (47, 48, 49) of the coils (41, 42, 43), said closure member (90) being assembled to the mobile support (9) and the bracket (80).

20. The device according to claim 14, **characterized in that**:
- the retaining pin (5) consists of a central fixed holding rod (189) and of two lateral movable holding rods (187, 188) having each a pyrotechnic actuator (185, 186);
- two rollers (111, 113) being mounted on a thin tube (160) in which the lateral movable holding rods (187, 188) slide, and a roller (112) being mounted on the central fixed holding rod (189) which is mounted on the thin tube (160).

21. The device according to claim 20, **characterized in that**:
- each of the two lateral movable holding rods (187, 188) has a pyrotechnic actuator (185, 186) disposed on and fixed to the external face (17, 18) of the corresponding lug (11, 12) of the fixed support (8);
- the retaining pin (5) has at each end a fixing assembly in the corresponding lug (11, 12) of the fixed support (8), and a sliding assembly of the corresponding lateral part (21, 22) of the mobile support (9); each fixing assembly being locked to each of the lugs (11, 12) with a determined clamping force;
- each of the movable lateral holding rods passes through or engages in the corresponding fixing assembly.

22. The device according to claim 21, **characterized in that**:
- each fixing assembly includes a metal tube (121) which passes through the oblong hole (23, 24) in the corresponding lateral part (21, 22) of the mobile support (9), and which passes through the hole (13, 14) through the corresponding lug (11, 12);
- an internal taper (122) is provided at the same end as said lateral part (21, 22) and an external taper (123) is provided at the same end as said lug (11, 12) in order to lock the fixing assembly.

23. The device according to claim 22, **characterized in that**:
- each sliding assembly includes an external washer (131) with a square half-protuberance (132) and a hole (133) through it; and an internal washer (125) with a square half-protuberance (126) and a hole (127) through it;
- each half-protuberance (126, 132) nesting in the other washer (131, 125) by means of tenons (128, 134) entering the holes (129, 135) to form a square protuberance;
- the external washer (131) is disposed between the corresponding lug (11, 12) of the fixed support (8) and the corresponding lateral part (21, 22) of the mobile support (9);
- the internal washer (125) is disposed between said lateral part (21, 22) and the internal taper (122) of the metal tube (121);
- the square protuberance passes through and slides in the corresponding oblong hole (23, 24) in the lateral part (21, 22) of the mobile support (9).

24. The device according to claim 23, **characterized in that** the tube (160) is supported by four bearings (141, 142, 143, 144) forming part of a bracket (140) mounted on and fixed under the base (19) of the fixed support (8).

25. The device according to one of claims 20 to 24, **characterized in that** the attachment pin (7) includes three semi-circular notches (117, 118, 119) at the edge of the connecting portion (20) forming part of the end (39) of the mobile support (9), each notch (117, 118, 119) receiving the free end (107, 108, 109) of one aforementioned coil (101, 102, 103).
